(19) Europäisches Patentamt / European Patent Office / Office européen des brevets

(11) **EP 1 557 667 B1**

(12) **EUROPÄISCHE PATENTSCHRIFT**

(45) Veröffentlichungstag und Bekanntmachung des Hinweises auf die Patenterteilung:
**14.12.2011 Patentblatt 2011/50**

(21) Anmeldenummer: **03808922.3**

(22) Anmeldetag: **15.10.2003**

(51) Int Cl.:
***G01N 27/62*** (2006.01)

(86) Internationale Anmeldenummer:
**PCT/RU2003/000454**

(87) Internationale Veröffentlichungsnummer:
**WO 2004/036206 (29.04.2004 Gazette 2004/18)**

(54) **GASANALYSEVERFAHREN UND IONISATIONSDETEKTOR ZUR AUSFÜHRUNG DES VERFAHRENS**

GAS ANALYSIS METHOD AND IONISATION DETECTOR FOR CARRYING OUT SAID METHOD

PROCEDE D'ANALYSE DE GAZ ET DETECTEUR A IONISATION PREVU A CET EFFET

(84) Benannte Vertragsstaaten:
**AT BE BG CH CY CZ DE DK EE ES FI FR GB GR HU IE IT LI LU MC NL PT RO SE SI SK TR**

(30) Priorität: **18.10.2002 RU 2002128663**

(43) Veröffentlichungstag der Anmeldung:
**27.07.2005 Patentblatt 2005/30**

(73) Patentinhaber:
• **Kudryatsev, Anatoly Anatolievich**
**St. Petersburg 197101 (RU)**
• **TSYGANOV, Alexandr Borisovich**
**St. Petersburg 199397 (RU)**

(72) Erfinder:
• **Kudryatsev, Anatoly Anatolievich**
**St. Petersburg 197101 (RU)**
• **TSYGANOV, Alexandr Borisovich**
**St. Petersburg 199397 (RU)**

(74) Vertreter: **Jeck, Anton**
**Jeck - Fleck - Herrmann**
**Patentanwälte**
**Klingengasse 2/1**
**71665 Vaihingen/Enz (DE)**

(56) Entgegenhaltungen:
DE-C1- 19 627 620   RU-C1- 2 109 278
RU-C1- 2 120 626   US-A- 4 028 617
US-A- 5 153 519   US-A- 5 532 599

**Beschreibung**

Die vorliegende Erfindung bezieht sich auf Mittel zur Feststellung einer Gasmischungszusammensetzung und sieht die qualitative und quantitative Analyse der chemischen Zusammensetzung der Verunreinigungen in einem Grundgas vor.

Es sind verschiedene Verfahren zum Analysieren von Gasen bekannt, bei denen deren chemische Zusammensetzung mittels der Massenanalyse der Ionen bestimmt wird, die sich bei der Ionisierung dieser Gase bilden, siehe beispielsweise "Die hocheffektive Gas-Chromatographie", K. Hayver, (sed.), "MIR", Moskau, 1993, 289 S. Die Messung des Stroms von Ionen, die hinsichtlich des Verhältnisses ihrer Ladung zu ihrer Masse getrennt werden, erlaubt die Feststellung der qualitativen und quantitativen Zusammensetzung der Gasmischung. Das gemeinsame Merkmal des bekannten Verfahrens und des vorliegenden Verfahrens ist die Ionisierung der Verunreinigungen in einer Ionisationskammer. Ein Nachteil des bekannten Verfahrens besteht in großen Abmessungen des für die Durchführung des Verfahrens verwendeten Detektors, da die Ionen mit einem unterschiedlichen Verhältnis der Ladung zur Masse ausgewählt und getrennt in einem Massenspektrometer nach dem Flug auf der Flugbahn festgestellt werden, die eine bestimmte Länge besitzt. Als Nachteil gilt auch die Notwendigkeit, ein genügend hohes Vakuum auf dieser Flugbahn zu gewährleisten, damit die Ionen bei den Zusammenstößen mit den Restgasmolekülen nicht abgelenkt werden.

Ein weiteres Verfahren der Bestimmung der chemischen Zusammensetzung von Gas ist die Messung der kinetischen Energie der Elektronen, die bei der Ionisierung des Gases entstehen, wenn die Energie der anregenden Teilchen, beispielsweise der Photonen, festgelegt ist, siehe beispielsweise T. Karlson. "Fotoelektronische und Auger-Spektroskopie", Maschinistroyenie, 1981, 431 S. Die Differenz zwischen der bekannten Energie der Photonen und der gemessenen kinetischen Energie der Elektronen ergibt eine Information über das Potential der Ionisierung der Moleküle oder Atome des Gases, aus denen die Zusammensetzung der Mischung festgestellt wird. Die Energieverteilung der Fotoelektronen und die bekannten Schnitte der Fotoionisierung erlauben auch die Bestimmung der partiellen Konzentrationen der Komponenten des zu analysierenden Gases. Die gemeinsamen Merkmale des bekannten Verfahrens und der vorliegenden Erfindung sind die Ionisierung der Verunreinigungen in einer Ionisationskammer und die Strommessung. Der Nachteil des vorgenannten, bekannten Verfahrens besteht in den großen Abmessungen des Detektors, da die Analyse der Elektronenenergie ebenfalls während des Flugs längs einer Flugbahn erfolgt, die eine bestimmte Länge besitzt. Dabei ist es auch nötig, ein genügend hohes Vakuum längs dieser Flugbahn aufrechtzuerhalten, damit die Elektronen bei den Zusammenstößen mit dem Restgas nicht abgelenkt werden.

Ferner sind Ionisationsdetektoren bekannt, die die Bestimmung des Vorhandenseins von Verunreinigungen im Gas aufgrund der Veränderung des Ionisierungsstroms bei der Anregung dieses Gases ermöglichen, siehe beispielsweise US-Patent 5 317 271 von Wentworth et al., US-Patent 5 192 865 von Zhuetal, US-Patent 5 153 519 von Wentworth et al. und US-Patent 5,578,271 von Simon et al. Diese Detektoren haben geringe Größe und können unter unterschiedlichen Druckverhältnissen arbeiten, sogar bis zum atmosphärischen Druck. Nach der Gesamtheit der wesentlichen Merkmale steht der vorliegenden Erfindung das US-Patent 5,532,599 von Steam et al. am nächsten, das als Prototyp gewählt ist. Die gemeinsamen Merkmale mit der vorliegenden Erfindung bestehen darin, dass die Atome oder Moleküle der Verunreinigungen bei den Zusammenstößen mit den Teilchen bestimmter Energie (mit den metastabilen Atomen von Helium) in der Ionisationskammer ionisiert werden; der Strom zur in der Ionisationskammer angeordneten Elektrode wird in Abhängigkeit von der an die Elektrode angelegten Spannung gemessen, und das Vorhandensein von Verunreinigungen wird aus den Elektrodenstromdaten ermittelt. Der angegebene Prototyp erlaubt jedoch nur festzustellen, dass eine Verunreinigung im Grundgas aufgetreten ist, erlaubt aber keine unmittelbare, qualitative Analyse (Identifizierung der Atome oder Moleküle der Verunreinigungen) und keine quantitative Analyse (Messung der Konzentration der Verunreinigungen).

In DE 196 276 20 wird die Detektion von halogenosgenischen Verbindungen mittels eines Elektroneneinfangdetektors beschrieben.

Die vorliegende Erfindung hat das Ziel, ein Verfahren zum Analysieren der chemischen Zusammensetzung von Gasen anzugeben, das eine qualitative und quantitative Analyse einer großen Menge an Stoffen in einem breiten Druckbereich bis hin zum atmosphärischen Druck durchzuführen erlaubt. Ferner bezweckt, einen Ionisationsdetektor zur Durchführung des vorgeschlagenen Verfahrens zu schaffen, der eine geringe Größe und eine einfache Konstruktion aufweist und in einem breiten Druckbereich der zu analysierenden Gase sowie ohne Verwendung von Vakuumpumpevorrichtungen arbeitet. Das vorgeschlagene Verfahren zum Analysieren der Zusammensetzung von Gasen und der Ionisationsdetektor auf der Grundlage dieses Verfahrens können sowohl als selbständige Analysemittel als auch in Verbindung mit Gaschromatografen, Atomanalysatoren für Proben in einem induktiv gekoppelten Plasmaquellen (ICP), Atomanalysatoren für Feststoffproben einschließlich der Feststofflegierungen, und Gasanalysatoren für die Prüfung von Gasmedien in verschiedenen, technologischen Prozessen verwendet werden.

Um die gestellte Aufgabe zu lösen, wird das nächstgelegene, bekannte Verfahren zum Analysieren von Verunreinigungen im Gas derart verwendet, dass die Atome oder Moleküle der Verunreinigungen bei den Zusammenstößen mit den Teilchen bestimmter Energie in der Ionisationskammer ionisiert werden und der Strom zu einer der mindestens

zwei in einer Ionisationskammer vorhandenen Elektroden in Abhängigkeit von der an die Elektroden angelegten Spannung gemessen wird; gemäß der vorgeschlagenen Erfindung wird der Druck des Grundgases und der Aufbau der Ionisationskammer derart gewählt, dass der Abstand von einem beliebigen Punkt in der Ionisationskammer bis zur nächstgelegenen Kammerwand oder einer der erwähnten Elektroden geringer als die mittlere Länge der Elektronenverschiebung ist, bevor diese Elektronen den vorbeschriebenen Anteil an kinetischer Energie verlieren; ferner wird ein Aquipotentialraum in der Ionisationskammer vorgesehen, in dem Ionenzusammenstöße auftreten; ferner wird die Anzahl der bei der Ionisation der Atome oder Moleküle erzeugten Elektronen mit den charakteristischen Energiewerten aus dem Strom abhängig von der angelegten Spannung ermittelt; schließlich werden die Daten der Elektronenparameter dazu verwendet, die Verunreinigungsstoffe im Gas zu identifizieren. Gemäß dieser technischen Löung ist eine qualitative und quantitative Analyse einer großen Menge von Gasmischungen unter Verwendung verschiedener Arten des Grundgases in verschiedenen Konzentrationen möglich. Dabei ist die Realisierung des Verfahrens einfach und kompakt, da nur die Elektroden, die Quelle zur Ionisierung von Teilchen mit bestimmter Energie und die Mittel zur Messung des elektrischen Stroms in Abhängigkeit von der angelegten Spannung erforderlich sind.

Gemäß einer weiteren Ausbildung der Erfindung lässt sich als Grundgas Edelgas einsetzen, da dieses nicht mit den Atomen oder Molekülen der Verunreinigungen reagiert und die Ergebnisse der qualitativen und quantitativen Analyse nicht fehlerhaft beeinflusst. Außerdem verfügen die Erregungszustände der Edelgase in der Regel über eine größere Energie als die Energie derjenigen Elektronen, die sich bei der Ionisierung der Verunreinigungen bilden. Deshalb erfolgen keine elastischen Zusammenstöße dieser Elektronen mit den Atomen des Grundgases, so dass die charakteristische Energie der Elektronen nicht fehlerhaft beeinflusst wird. Auch die metastabilen Atome eines Edelgases verfügen über eine genügende Energie, die für die Ionisierung der meisten chemischen Verbindungen ausreicht. Dadurch kann das angeregte Edelgas gleichzeitig als Quelle der Teilchen bestimmter Energie für die Ionisierung der Verunreinigungen verwendet werden.

Gemäß einer weiteren Ausbildung der Erfindung lässt sich als Grundgas Helium verwenden. Die metastabilen Atome des Heliums verfügen über diejenige Energie, die für die Ionisierung aller Gase mit Ausnahme von Neon nötig ist, so dass eine Analyse einer großen Menge an Stoffen möglich ist.

Gemäß einer weiteren Ausbildung der Erfindung wird das Grundgas unter einem Druck im Bereich von $10\text{-}10^5$ Pa und mehr verwendet. Dies macht es möglich, auf Vakuumpumpenvorrichtungen zur Gasentladung zu verzichten und die Analyse zu vereinfachen.

Gemäß einer weiteren Ausbildung der Erfindung wird die angelegte Spannung zwischen den erwähnten Elektroden im Bereich von Null bis zum Ionisierungsschwellwert des Grundgases geändert; die Menge der Elektronen mit den charakteristischen Energiewerten wird nach der zweiten Ableitung des Stroms in Abhängigkeit von der angelegten Spannung bestimmt. Daher kann eine qualitative und quantitative Analyse von Verunreinigungen mit einfachen Mitteln durchgeführt werden.

Gemäß einer weiteren Ausbildung der Erfindung wird zur Bildung des Äquipotentialraums in der Ionisationskammer eine gepulste Energiequelle verwendet, um in der Ionisationskammer ein Nachleuchtplasma zu bilden; die Atome oder Moleküle der Verunreinigungen werden bei Zusammenstößen mit metastabilen Atomen oder Molekülen des Grundgases ionisiert, die bei der Einwirkung der gepulsten Energiequelle entstanden sind. Der erwähnte Strom wird mit einer Zeitverzögerung nach der Einwirkung der gepulsten Energiequelle gemessen. Dabei wird eine solche Konzentration und Temperatur der geladenen Teilchen im erwähnten Nachleuchtplasma im Zeitpunkt des Messens gewährleistet, dass die Debey-Länge viel geringer als die typischen Abmessungen der Ionisationskammer ist. Dies ist eine der Varianten zur Schaffung des erwähnten Aquipotentialraums, da das Nachleuchtplasma über die Eigenschaft der Elektroneutralität verfügt und das Feld innerhalb des Plasmas nahe Null liegt. Dadurch wird die Gasanalyse vereinfacht, weil die gepulste Energiequelle gleichzeitig sowohl das Nachleuchtplasma zum Ausgleich des Potentials im Kammerraum als auch metastabile Atome oder Moleküle des Grundgases mit der bestimmten Energie erzeugt, die die Atome oder Moleküle der Verunreinigungen ionisiert.

Gemäß einer weiteren Ausbildung der Erfindung wird als gepulste Energiequelle eine gepulste Glimmentladung zwischen den erwähnten Elektroden verwendet. Dies ist die einfachste Quelle des Plasmas und der metastabilen Atome.

Gemäß einer weiteren Ausbildung der Erfindung wird als gepulste Energiequelle eine Impulslaserstrahlung verwendet, die das Plasma zwischen den erwähnten Elektroden erzeugt. Dies erlaubt, den Bereich der zu analysierenden Stoffe und den Bereich der möglichen Konzentrationen der zu bestimmenden Verunreinigungen zu erweitern.

Gemäß einer weiteren Ausbildung der Erfindung werden die Atome oder Moleküle der Verunreinigungen durch Bestrahlen des Nachleuchtplasmas mit Photonen der charakteristischen Energie ionisiert, die von einer äußeren Quelle erzeugt wird. Dies erlaubt, zusätzliche Gruppen der Elektronen mit ihren charakteristischen Energien zu beobachten, die sich von derjenigen Energie der Elektronen unterscheiden, die sich bei der Ionisierung der Verunreinigungen durch metastabile Atome des Grundgases bilden. Dadurch ist es möglich, die Analyse zu erweitern. Gemäß einer weiteren Ausbildung der Erfindung werden die Atome oder Moleküle der Verunreinigungen bei der Bestrahlung mit Photonen ionisiert, die mit den Atomen oder Molekülen des Grundgases in Resonanz bringbar sind. Dies erlaubt, die Effektivität der Ionisierung der Verunreinigungen durch Photonen anhand der Vergrößerung der Laufweglänge der Photonen in der Ionisationskammer und die Verfahrensempfindlichkeit zu erhöhen.

Gemäß einer weiteren Ausbildung der Erfindung werden Elektroden in flacher Form verwendet, die parallel zueinander angeordnet sind und gleichzeitig die Rolle der Wände der Ionisationskammer erfüllen. Diese Variante der Form und der relativen Anordnung der genannten Elektroden ist höchst einfach, obwohl gemäß der Erfindung eine Vielzahl anderer Konfigurationen möglich ist.

Gemäß einer weiteren Ausbildung der Erfindung kann die Ionisationskammer N isolierte Kathoden umfassen; jeder Kathode wird ein individueller Spannungswert bezüglich einer oder einiger Anoden zugeordnet; der Strom wird an jeder der genannten N Kathoden gemessen; nach der Gesamtheit der gemessenen Werte wird die Anzahl der Elektronen mit den charakteristischen Energiewerten ermittelt, die bei der Ionisierung der erwähnten Atome oder Moleküle der Verunreinigungen entstehen. Dies erlaubt eine Erhöhung der Geschwindigkeit der Analyse um das N-fache.

Gemäß einer weiteren Ausbildung der Erfindung wird ein Leitgitter zwischen den angegebenen Elektroden angebracht und elektrisch mit der Anode zur Bildung des dazwischen liegenden Äquipotentialraums verbunden. Die Atome oder Moleküle der Verunreinigungen werden bei der Bestrahlung des Raums zwischen dem Gitter und der Anode mit neutralen Teilchen einer bestimmten Energie aus der äußeren Quelle ionisiert. Dies ist noch eine der Varianten zur Erzeugung des Aquipotentialraums in der Ionisationskammer, in dem die ionisierenden Zusammenstöße geschehen. Diese Variante erlaubt, mit einer kleineren Konzentration der ionisierten Verunreinigungen zu arbeiten und auf die Verwendung eines Nachleuchtplasmas zu verzichten (plasmaloses Detektieren). Auch kann die Energieverteilung der Elektronen in Abwesenheit des Plasmas verringert werden, so dass die Möglichkeiten der qualitativen Analyse verbessert werden. Als neutrale Teilchen können Photonen oder metastabile Atome verwendet werden.

Gemäß einer weiteren Ausbildung der Erfindung werden die erwähnten Elektroden und das Gitter in flacheren Formen verwendet; sie werden parallel zueinander angeordnet; dabei werden die genannten Elektroden als Wände der Ionisationskammer verwendet. Dies ist die einfachste Variante der Geometrie bei der Realisierung des Verfahrens und des Detektors.

Gemäß einer weiteren Ausbildung der Erfindung werden die Atome oder Moleküle der Verunreinigungen bei der Bestrahlung mit den Photonen ionisiert, die für die Atome oder Moleküle des Grundgases resonanzfähig sind. Dies erlaubt, die Effektivität der Ionisierung der Verunreinigungen durch Photonen anhand der Vergrößerung der Laufweglänge der Photonen in der Ionisationskammer zu erhöhen und die Empfindlichkeit zu verstärken.

Gemäß einer weiteren Ausbildung der Erfindung wird die auf die Kathode gelangende Ladung gesteuert; bei der Überschreitung eines vorgegebenen Werts wird die Ionisierung im Raum zwischen dem Gitter und der Anode eingestellt, und ein elektrisches Feld wird bis zur Entfernung der geladenen Teilchen aus dem Raum zwischen den Elektroden angelegt; dann wird die Ionisierung und die Messung des Stroms wieder aufgenommen. Dies erlaubt die Aufrechterhaltung des Äquipotentialraums in der Ionisationskammer, in dem die ionisierenden Zusammenstöße stattfinden, auf das erforderliche Niveau zur Vermeidung von Messfehlern.

Gemäß einer weiteren Ausbildung der Erfindung werden in der Ionisationskammer *N* isolierte Kathoden befestigt; jeder Kathode wird ein individueller Spannungswert bezüglich einer oder einiger Anoden und in Übereinstimmung mit einem oder mehreren Gittern zugeordnet; der Strom wird individuell an jeder der genannten N Kathoden gemessen; nach der Gesamtheit der gemessenen Werte wird die Anzahl der Elektronen mit den charakteristischen Energiewerten ermittelt, die bei der Ionisierung der erwähnten Atome oder Moleküle der Verunreinigungen entstehen. Dies erlaubt die Erhöhung der Analysengeschwindigkeit um das N-fache.

Gemäß einer weiteren Ausbildung der Erfindung kann die Analyse eines Probentargets ausgeführt werden, das unter der Einwirkung einer zusätzlichen Energiequelle besprüht wird; dabei wird der besprühte Inhalt als Verunreinigung mit dem Grundgas gemischt und zur Analyse in die Ionisationskammer eingegeben. Als zusätzliche Energiequelle kann beispielsweise eine Gasglimmentladung mit einer ausreichenden Stromdichte oder eine Laserstrahlung verwendet werden, die auf die in der Ionisationskammer untergebrachten Probe oder auf eine der Elektroden in der Kammer zur Bestimmung der Zusammensetzung gerichtet ist. Es erlaubt die Erweiterung der Menge der Stoffe, deren Zusammensetzung anhand des vorgeschlagenen Verfahrens und Detektors analysiert werden kann.

Gemäß einer weiteren Ausbildung der Erfindung wird das Probentarget als Kathode verwendet, die durch eine vorläufige Plasmaentladung besprüht wird, die mit Hilfe der erwähnten zusätzlichen Energiequelle gezündet wird. Dadurch werden Analysen der Zusammensetzung von metallischen oder leitenden Proben möglich, und die Menge an Stoffen erweitert, die anhand des vorgeschlagenen Verfahrens und Detektor analysiert werden können.

Gemäß einer weiteren Ausbildung der Erfindung werden die Moleküle der Verunreinigungen vorläufig der Dissoziation in Atome in der zusätzlichen Plasmaentladung unterzogen, und es wird die Analyse der atomaren Zusammensetzung der Verunreinigungen vorgenommen. Es erlaubt die Durchführung einer qualitativen und quantitativen Analyse des Gehalts der chemischen Elemente in der Probe.

Die wesentlichen Merkmale des Detektors gemäß der vorgeschlagenen Erfindung sind den oben beschriebenen, wesentlichen Merkmalen des vorgeschlagenen Verfahrens zur Gasanalyse auf dem Niveau der technischen Lösungen ähnlich und sind als Merkmale, die diese Vorrichtung charakterisieren, im Patentanspruch 21 zum Ausdruck gebracht.

Außerdem kann gemäß der vorgeschlagenen Erfindung im Ionisationsdetektor die Bestrahlungsquelle mit Argon gefüllt sein und aus einem zylindrischen Fenster, das für diese Bestrahlung durchsichtig ist, sowie aus zwei Elektroden an den Stirnseiten des Fensters und aus einer Stromversorgungsquelle zur Zündung der Gasglimmentladung bestehen; die Anode, die Kathode und das Gitter für das Detektieren der Fotoelektronen können die Form von flachen, zueinander parallelen Ringen aufweisen, die koaxial und außerhalb des zylindrischen Fensters der Strahlungsquelle angebracht sind. Dabei geht die Strahlung nur durch den Raum zwischen der Anode und dem Gitter.

Ein derartiger Aufbau der Strahlungsquelle und der Detektorelektroden erlaubt eine optimale Ausnutzung der Strahlung für die Fotoionisierung, weil es einen großen Festwinkel gibt, unter dem die Strahlung in den Bereich zwischen der Anode und das Gitter gelangt.

## Kurzbeschreibung der Zeichnungen

Die Erfindung wird nun anhand von Ausführungsbeispielen näher erläutert. Es zeigen:

Fig. 1    eine Schaltungsanordnung und Querschnittsskizze eines Ionisations- detektors mit einer Ionisationskammer mit zwei planparallelen Elektroden, zwischen denen sich eine gepulste Gasglimmentladung entzündet, und ferner ein Schaubild, das die Verteilung des elektrischen Potentials im Nachleuchtplasma zwischen den Elektroden darstellt,

Fig. 2    eine zweite Ausführung einer Schaltungsanordnung und Querschnittsskizze eines Ionisationsdetektors mit einer Ionisations*- kammer mit zwei planparallelen Elektroden, zwischen denen sich ein flaches Leitgitter befindet, wobei in die Kammer ein Strom aus ionisierenden Photonen von einer äußeren Quelle gerichtet wird, und ferner ist wieder die Verteilung des elektrischen Feldes zwischen den Elektroden gezeigt,

Fig. 3    eine Schaltungsanordnung des Ionisationsdetektors mit der Impulsentladung zwischen den planparallelen Elektroden und eine Ansicht der Ionisationskammer in stereometrischer Projektion, wobei die Kathode in N isolierte Segmente aufgeteilt ist und dabei für jedes der Segmente eine Spannungs-Strom-Kennlinie individuell gemessen wird,

Fig. 4    eine Schaltungsanordnung eines Ionisationsdetektors mit einer gepulsten Glimmentladung zwischen den planparallelen Elektroden und ein Querschnitt der Ionisationskammer, in der N Kathoden- Anoden-Paare untergebracht sind,

Fig. 5    eine Schaltungsanordnung eines Ionisationsdetektors ohne Erzeu- gung eines Nachleuchtplasma und eine Ionisationskammer mit einem Gitter zwischen der Kathode und Anode in stereometrischer Projektion, wobei die Kathode in N isolierte Segmente aufgeteilt ist und das Gitter und die Anode gemeinsam für alle N Segmente vorhanden sind,

Fig. 6    eine Schaltungsanordnung eines Ionisationsdetektors ohne Erzeugung eines Nachleuchtplasmas und ein Querschnitt einer Ionisationskammer, wobei in der Kammer N Kathoden-Anoden- Paare untergebracht sind,

Fig.7    ein Querschnitt des Ionisationsdetektors und eine Schaltungs- anordnung zur Bestimmung der Zusammensetzung einer leitenden Probe, die durch die Einwirkung einer vorherigen Gasglimmentladung atomisiert wird,

Fig. 8    ein Querschnitt eines Ionisationsdetektors und eine Schaltungsan- ordnung zur Bestimmung der Elementenzusammensetzung der Verunreinigungen, die vorher in einer zusätzlichen Gasentladung atomisiert werden, und

Fig. 9    ein Querschnitt eines Ionisationsdetektors und eine Schaltungsan- ordnung zur Photoionisationsbestimmung von Verunreinigungen in atmosphärischer Luft.

Die technische Lösung zur Durchführung des Verfahrens gemäß der Erfindung zur Gasanalyse und der Ionisationsdetektor beruhen auf dem folgenden qualitativen Modell der sich dabei ablaufenden physischen Prozesse, wobei die konkreten Einzelheiten des physikalischen Modells das breite Verständnis der wesentlichen Merkmale gemäß der Erfindung nicht einschränken soll.

Bei dem Zusammenstoß der Atome oder Moleküle einer Verunreinigung A mit Teilchen B*, die eine bestimmte Energie $E_p$ hat, erfolgt die Ionisierung der Atome oder Moleküle der Verunreinigung mit der Bildung der freien Elektronen e, wenn die Energie der Teilchen B* dafür ausreichend ist:

$$A + B^{\bullet} \rightarrow A^{+} + B + \overline{e} \qquad\qquad (1)$$

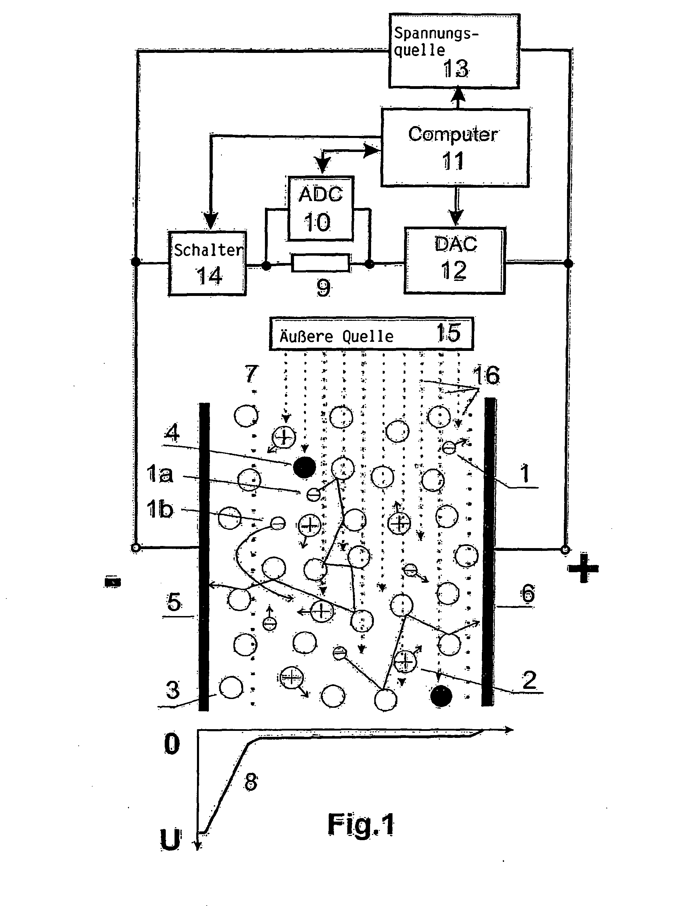

In Fig. 1 sind schematisch die sich bei diesen Zusammenstößen gebildeten Elektronen 1 und die Ionen 2 der Verunreinigung sowie die Atome 3 eines Grundgases dargestellt. Als Teilchen einer bestimmten Energie $E_p$ lassen sich zum Beispiel die metastabilen oder die rezonanzangeregten Atome 4 eines Grundgases (weiterhin Puffergas genannt) verwenden. Auch als genannte Teilchen mit einer bestimmten Energie können Photonen mit einer vorgegebenen Energie $E_p$ aus der äußeren Quelle verwendet werden. Die dabei frei werdenden Elektronen bekommen die kinetische Energie $E_e$:

$$E_e = E_p - E_i \qquad\qquad (2)$$

Wobei $E_i$ das Potential der Ionisierung des Atoms oder Moleküls der zu analysierenden Verunreinigung ist.
Die metastabilen Atome 4 können bei der gepulsten Plasmaentladung erzeugt werden, die in der Ionisationskammer zwischen der Kathode 5 und der Anode 6 gezündet wird, wenn als Puffergas ein Edelgas, z. B. Helium, verwendet wird. Als Wände der Ionisationskammer können die Elektroden 5, 6 selbst dienen: Dabei gewährleisten die übrigen Wände die Isolierung zwischen der Kathode und der Anode. Die Wände können teilweise oder vollständig (aus diesem Grunde sind sie auf der Fig. 1 nicht gezeigt) fehlen, wenn das Durchfließen der zu analysierenden Gasmischung durch die Kammer zweckmäßigerweise zu gewährleisten ist. Die äußeren Oberflächen der Kathode 5 und der Anode 6 (die den Zuleitungsdrähten in Fig. 1 zugewandt sind) weisen auch eine Isolierbeschichtung auf, die jedoch in Fig. 1 aus Vereinfachungsgründen nicht gezeigt ist.
Das Verhältnis der Konzentrationen des Grundgases und der zu bestimmenden Verunreinigungen soll so sein, dass der Hauptanteil der sich bildenden metastabilen Atome die Atome des Pufferedelgases sind. Nach dem Abschluss der Entladung wird eine schnelle Bestrahlung aller angeregten Atome erfolgen: Im Nachleuchtplasma werden hauptsächlich metastabile Atome des Puffergases mit der bekannten Energie $E_p$, anwesend sein. Bei Helium haben solche Atome die Energie 19,8 und 20,6eV, die für die Ionisierung aller bekannten Verunreinigungsatome und -moleküle mit Ausnahme von Neon ausreichen. Die Verwendung von Neon als Puffergas kann auch zweckmäßig sein, weil im Unterschied zu Helium, das zwei metastabile Zustände mit der Energiedifferenz von 0,8eV hat und zwei Gruppen von Elektronen mit den Energien gemäß der Formel (2) erzeugen kann, die metastabilen Pegel von Neon einen Energiespalt von etwa 0,1 eV aufweisen, so dass diese Pegel des Neons als ein Pegel betrachtet werden können, um die Verunreinigungsidentifizierung zu vereinfachen.
Die anderen Edelgase haben auch metastabile Zustände mit einem hohen Wert $E_p$. Ihre Verwendung als Grundgas kann auch aus der Sicht der Lage ihrer metastabilen Pegel zweckmäßig sein, die für die Ionisierung einiger Verunreinigungen, aus der Sicht ihrer chemischen Stabilität (treten nicht in chemische Reaktionen mit den Verunreinigungen), der ausreichenden Häufigkeit und der Erhaltung des gasförmigen Zustands in einem breiten Temperaturenbereich geeignet ist. Außerdem bestehen Edelgase nur aus Atomen, deren untere angeregte Zustände genügend hoch liegen. Dabei werden die Elektronen, die sich bei der Ionisierung nach der Formel (1) bilden, nur elastischen Zusammenstößen mit dem Edelgas in der Ionisationskammer unterzogen, dass nur wenig die charakteristische Energie $E_e$ verzerrt.
Dennoch können für die Ionisierung der Verunreinigungen andere metastabile Atome oder Moleküle eingesetzt werden, die eine genügend hohe Energie $E_p$ gemäß der Formel (2) in Abhängigkeit von Bedingungen, bei denen der Ionisationsdetektor arbeitet, von der Wahl des Grundgases und der Zusammensetzung der zu bestimmenden Verunreinigungen aufweisen.
Um den Äquipotentialraum in der Ionisationskammer zu schaffen, in dem die ionisierenden Zusammenstöße stattfinden, werden alle Elektronen, die sich bei den ionisierenden Zusammenstößen bilden, eine feste, kinetische Energie in Bezug auf die Elektroden der Kammer 5, 6 haben. Wenn dabei gemäß der vorliegenden Erfindung der Druck des Grundgases und der Aufbau der Ionisationskammer derart gewählt werden, dass der Abstand eines beliebigen Punkts in der Ionisationskammer von den Elektroden 5, 6 oder bis zur nächstgelegenen Wand (die in Fig. 1 nicht gezeigt ist) geringer als die mittlere Länge der Elektronenverschiebung ist, bevor diese Elektronen einen vorgegebenen Anteil ihrer kinetischen Energie verlieren, so "wandern" die Elektronen in zufälliger Weise in den Äquipotentialraum in der Ionisationskammer. Die Elektronen unterliegen hauptsächlich elastischen Zusammenstößen mit den Atomen des Puffergases, solange sie nicht auf die Oberfläche der genannten Elektroden 5, 6 oder auf eine der Wände gelangen und dort rekombinieren (verloren gehen). Bei dem elastischen Zusammenstoß des Elektrons mit dem Atom verliert das Puffergas einen Anteil seiner kinetischen Energie, der gleich $m/M_b$ ist, wobei m die Masse des Elektrons und $M_b$ die Masse des Atoms des Puffergases ist. Zum Beispiel beträgt $m/M_b$ für Helium etwa 0,0001. Aus diesem Grunde wird das Elektron nur etwa 1 % seiner Energie verlieren, wobei es 100 elastische Zusammenstöße ausgehalten hat.

Die mittlere freie Länge eines Elektrons bei elastischen Zusammenstößen ist:

$$L_e = 1 \ / \ (N_b \cdot \sigma_e) \qquad\qquad (3)$$

wobei $N_b$ die Konzentration der Atome des Puffergases und $\sigma_e$ der Elektronenquerschnitt für den elastischen Zusammenstoß des Elektrons mit dem Atom des Puffergases ist. Der Querschnittswert für verschiedene Gase ist bekannt und entspricht etwa einem gaskinetischen Querschnitt von etwa $10^{-16} cm^2$. Nach jedem Zusammenstoß durchläuft das Elektron den mittleren Abstand $L_e$, und dann wechselt es in zufälliger Weise die Richtung seiner Bewegung aufgrund eines anderen Zusammenstoßes wie ein Brownsches Teilchen. Gemäß der bekannten Diffusionsgleichung wird sich das Brownsche Teilchen nach n Zusammenstößen

um eine mittlere Entfernung von $L_e \sqrt{n}$ vom Anfangspunkt verschieben. Auf diese Weise wird das Elektron beispielsweise 1 % seiner Energie verlieren, wobei es sich in Helium um eine mittlere Entfernung von 10 Längen des freien Laufes ($10 \cdot L_e$) zu dem Punkt bewegt hat, an dem die Ionisierung erfolgte. Das Niveau der Verluste (Verzerrungen) der Energie von Elektronen wird mit $\delta E$ eingeführt, das dem Verhältnis der verlorenen Energie zu der ursprünglichen gleich ist. Wenn in dem zu untersuchenden Fall für Helium $\delta E$ gleich 1% ist, so muss die Konfiguration der Ionisationskammer so sein, dass der minimale Abstand I von einem beliebigen Punkt in der Kammer bis zu einer der Wände oder bis zu den Elektroden den Wert $I_{min} = 10 \ L_e$ bei der gewählten Heliumkonzentration nicht überschreiten darf. Im Allgemeinen wird der Wert $I_{min}$ mit Hilfe der Werte $m/M_b$, $\sigma_e$, $N_b$ und dem gewählten Pegel von $\delta_E$ berechnet, und für I gilt die Bedingung:

$$l < l_{min} = \frac{\sqrt{\delta_E \cdot M_b / m}}{N_b \cdot \sigma_e} \qquad\qquad (4)$$

Somit kann bei der Beachtung der Bedingung (4) die Form der Ionisationskammer genügend willkürlich gewählt werden, weil das Gasglimmentladungsplasma den ganzen freien Raum zwischen den Elektroden einnehmen wird. Dennoch gilt als zweckmäßigste Form der Kammer das Parallelepiped, dessen zwei entgegengesetzte Seiten im Abstand $L=l_{min}$ angeordnet sind und gleichzeitig die genannten Elektroden 5, 6 (Fig. 1) darstellen. Dabei ist der "tote Raum" (d.h., der Raum, in dem das Gas nicht analysiert wird) der Ionisationskammer minimal. Für die Querabmessungen der Elektroden 5, 6 gilt die Bedingung (4) der Beschränkungen nicht; diese Querabmessungen können viel größer als L sein. Dabei werden die Elektronen auf den Elektroden 5, 6 oder an den Wänden der Ionisationskammer rekombinieren, bevor sie ihren Energieanteil verlieren, der großer als der vorgegebene Wert von $\delta_E$ ist. Wenn die Ionisationskammer bei dem atmosphärischen Druck des Grundgases, z. B. Helium, arbeitet, soll die Entfernung zwischen den Elektroden etwa 0,1 mm betragen. Die Querabmessung der Elektroden (und dementsprechend ihre Fläche) wird derart ausgewählt, dass der Gesamtstrom zu den Elektroden bei der vorhandenen Stromdichte von Elektronen, die sich bei der Ionisierung der Verunreinigungen bilden, für seine sichere Registrierung durch bekannte Elektronikschaltungen ausreichend sein sollte. Es ergibt sich auch aus der Bedingung (4) und den Bedingungen für eine Zündung der Gasglimmentladung, dass der Arbeitsdruckbereich von $10-10^5$ Pa und mehr betragen kann.

Die Äquipotentialität desjenigen Raums in der Ionisationskammer, in dem die ionisierenden Zusammenstöße stattfinden, kann mit verschiedenen Verfahren gewährleistet werden, z. B. mit der Schaffung eines Nachleuchtplasmas in der Ionisationskammer im Spalt zwischen den Elektroden 5, 6, wie in Fig.1 gezeigt ist. Nach der Ausschaltung der gepulsten Energiequelle sinkt die Temperatur $T_e$ der Elektronen im Nachleuchtplasma schnell bis auf eine Puffergastemperatur von etwa 0,03-0,1eV. Dabei soll für die Ziele gemäß der Erfindung die Konzentration $N_e$ der Elektronen derart sein, dass die Debey-Länge

$$L_D = \sqrt{T_e / (6\pi e^2 \cdot N_e)} \qquad\qquad (5)$$

viel geringer als die geometrischen Abmessungen der Ionisationskammer sind. Es sei darauf hingewiesen, dass die Konzentration der langsamen Elektronen $N_e$ des Nachleuchtplasmas viel größer als die Konzentrationen der zu analysierenden Elektronen ist, die sich bei der Ionisierung der Verunreinigungen im Nachleuchten bilden. Wie beispielsweise aus dem Artikel "Elektrischer Strom im Gas" von V.L. Granovsky, Band 1, Staatlicher Verlag der technisch-theoretischen Literatur, Moskau, 1952, 432 S., bekannt ist, überschreitet das elektrische Feld innerhalb des vom Plasma gefüllten Raums den Wert einiger $T_e$ nicht, so dass aus diesem Grunde die Meinung vertreten werden kann, dass das Feld praktisch fehlt und somit das Potential des Raums gleichartig ist. Dabei wird die Energie der Elektronen, die als Ergebnis der Ionisierung der Verunreinigungen entstehen, durch das Verhältnis der Formel (2) bestimmt, und sie hängt von den Koordinaten des Punkts nicht ab, an dem sie entstehen. Wenn nach der Ausschaltung der gepulsten Energiequelle zwischen den Elektroden 5 und 6 eine elektrische Spannung U angelegt wird, die das Potential der Ionisierung der Puffergasatome nicht überschreitet, so entsteht an der Kathode 5 ein Strom von vorwiegend positiven Ionen und an der Anode 6 ein Elektronenstrom. Dabei wird das Potential des Raums in der Ionisationskammer in Fig. 1 von der Grenzebene 7 bis zur Anode 6 praktisch konstant sein. Gleichzeitig wird ein elektrisches Feld in einer Schicht mit der Dicke von etwa $L_d$ zwischen der Kathode 5 und der Grenzebene 7 induziert, wobei die angelegte Gesamtspannung U sinkt, wie in der Kurve 8 gezeigt ist (Sprung des Potentials in der Kathodennähe). Gleichzeitig bildet sich in der Nähe der Anode 6 eine Schicht und ein Potentialsprung, der aber bekanntlich (vgl. beispielsweise die vorgenannte Literaturstelle) klein ist, und der Äquipotentialraum erhält ein Potential, das dem Potential der Anode 6 nah ist. Die Ursache dafür ist die geringe Geschwindigkeit der Ionen im Vergleich zu der Geschwindigkeit der Elektronen wegen der geringfügigen Masse m des Elektrons im Vergleich zu der Ionenmasse $M_b$.

Die metastabilen Atome im Nachleuchten gehen auch verloren (gehen in den Normalzustand über), und ihre Lebensdauer $\tau$ wird nach folgendem Verhältnis bewertet:

$$1 / \tau = 1 / \tau_d + N_d \cdot v_m \cdot \sigma_{id} + N_e \cdot v_e \cdot \sigma_{ie} + N_m \cdot v_m \cdot \sigma_2 \qquad (6)$$

wobei $N_d$ die Konzentration der Atome oder Moleküle der Verunreinigungen, $\sigma_{id}$ der Querschnitt der nicht elastischen Zusammenstöße der metastabilen Atome mit den Verunreinigungen,
$N_e$ die Konzentration der Elektronen,
$v_e$ *die* mittlere Elektronengeschwindigkeit im Plasma,
$\sigma_{ie}$ der Querschnitt des nicht elastischen Zusammenstoßes der metastabilen Atome mit den Elektronen,
$N_m$ die Konzentration der metastabilen Atome,
$\sigma_2$ der Querschnitt der nicht elastischen Paarzusammenstöße der metastabilen Atome,
$v_m$ die mittlere Geschwindigkeit der metastabilen Atome,
$\tau_d$ die Diffusionslebensdauer der metastabilen Atome vor ihrem Untergang an den Elektroden und Wänden der Kammer ist, die durch folgendes Verhältnis festgelegt wird:

$$\tau_d = L^2 \cdot N_b \cdot \sigma_b / v_m \qquad (7)$$

wobei $\sigma_b$- der Querschnitt der elastischen Zusammenstöße der metastabilen Atome mit dem Puffergas ist.

Die Elektronen 1 gelangen im Laufe der zufälligen "Wanderungen" im Äquapotentialraum in die Umgebung der Kathode 5, wobei sie praktisch ihre kinetische Anfangsenergie beibehalten, die sie im Moment der Ionisierung erhalten haben, weil gemäß der Bedingung (4) das Elektron an den Elektroden oder an den Wanden rekombiniert, d. h. es "verlässt das Spiel", bevor es einen merklichen Anteil seiner Energie verliert.

Wenn das Elektron 1 sich in das gleichmäßige, elektrische Feld (den Bereich zwischen den Ebenen 5 und 7 in Fig. 1) des kathodennahen Spannungsabfalls hineinbewegt, bewegt es sich unter einem zufälligen Winkel zum Vektor dieses Feldes, und es beginnt sich zu verlangsamen. Gemäß den Bewegungsgleichungen in einem gleichmäßigen, elektrischen Feld erreicht das Elektron (beispielsweise 1a in Fig. 1) bei einer vorgegebenen, negativen Spannung U an der Kathode 5 eine ausreichende kinetische Energie $E_e$, und ein Geschwindigkeitsvektor, der in einem bestimmten Konus um das Vektorfeld herum liegt, erreicht die Oberfläche der Kathode und trägt zum Strom bei. Andernfalls wird ein Elektron (beispielsweise 1 b in Fig. 1) durch das Verzögerungspotential der Kathode 5 in den Äquipotentialraum reflektiert. Dann kann es den Versuch wiederholen, auf die Kathode 5 zu gelangen oder möglicherweise geht es an der Anode 6 oder an den Wänden der Ionisationskammer verloren. Wenn sich das Elektron schon im erwähnten elektrischen Feld befindet und den elastischen Zusammenstoß mit dem Atom des Puffergases erlebt, so wird sich der absolute Wert seiner Energie nicht ändern; es kann sich vielmehr nur zufälligerweise die Richtung seines Geschwindigkeitsvektors ändern. Deshalb bleibt auch der Zufallscharakter Der Winkelverteilung des Geschwindigkeitssektors in Bezug auf den Feldvektor nach den elastischen Zusammenstößen in der Schicht zwischen den Ebenen 5 und 7 erhalten. Die Elektronengeschwindigkeitsverteilung im Äquipotentialraum in der Ionisationskammer lässt sich mit einer Verteilungsfunktion $F(v)$ beschreiben, wobei v das Elektronengeschwindigkeitmodul ist und $F(v)dv$ der Anzahl der Elektronen entspricht, die eine Geschwindigkeit im Bereich von *v* bis *v+dv* aufweisen. Insbesondere bestimmt die Verteilungsfunktion

$$F(\sqrt{2(E_p - E_i)}/m)$$ die Konzentration der Elektronen, die sich bei der Ionisierung der Atome oder Moleküle der Verunreinigungen mit dem Potential der Ionisierung $E_i$ gebildet haben. Die Integration über die Elektronengesamtenergie und über die Gesamtwinkel, bei denen die Elektronen in das gleichmäßige, elektrische Feld der Schicht eintreten (die Winkelverteilung der Elektronen wird aufgrund ihrer Zufallswanderung im Äquipotentialraum als gleichmäßig angenommen), ergibt die Strom-Spannungs-Kennlinie, d. h. die Abhängigkeit des Elektronenstromes $I_e$ zur flachen Kathode von der angelegten Spannung U und von der Art von F(v) (vgl. beispielsweise die letztgenannte Literaturstelle):

$$I_e = \frac{1}{4}\, e \cdot N_e \cdot S \cdot \int_{\sqrt{2eU/m}}^{\infty} v \cdot F(v) \cdot (1 - \frac{2e \cdot U}{m \cdot v^2}) \cdot dv \qquad (8)$$

wobei *e* die Ladung des Elektrons und S die Fläche der Elektrode ist.

Dabei lässt sich gleichzeitig der positive Ionenstrom auf die Kathode 5 durch das Produkt der Schichtfläche (Ebene 7) um die Kathode 5 herum und der Dichte des Diffusionsstroms dieser Ionen an der Schichtgrenze bestimmen. Die Oberfläche der Kathode 5 soll genügend glatt sein, damit die Dicke der Schicht im Vergleich zu dem lokalen Krümmungsradius der Kathodenoberfläche gering ist. In diesem Fall wird das elektrische Feld in der Schicht gleichmassig sein, und die Schichtfläche wird praktisch nicht von der angelegten Spannung U abhängen. Dabei bleibt der positive Ionenstrom auf die Kathode 5 mit der sich ändernden Spannung U praktisch konstant, so dass sein Beitrag von den resultierenden Strom-Spannungs-Kennlinien des Detektors abgezogen werden kann.

Der Strom zwischen den Elektroden 5, 6 wird je nach angelegter Spannung mit den bekannten Verfahren gemessen, zum Beispiel nach dem Sinken der Spannung am Widerstand 9, der in diesen Stromkreis eingeschaltet ist. Die Spannung am Widerstand 9, dessen Wert genügend klein sein, um die Strom-Spannungs-Kennlinie des Detektors nicht zu verfälschen, weshalb die Spannung mit Hilfe von bekannten Elektronikschaltungen verstärkt wird. Dann wird die Strom-Spannungs-Kennlinie punktweise aufgenommen. Beispielsweise wird die Spannung am Widerstand 9 dem Eingang eines Verstärkers mit einem Analog-Digitalumsetzer (ADU) 10 und weiter einem Rechner 11 zur Speicherung und Verarbeitung der Daten zugeführt. An diesen Rechner wird auch ein Digital-Analog-Umsetzer (DAU) 12 angeschlossen. Die negative Spannung am DAU-Ausgang wird an die Kathode 5 im Bereich von 0V bis zu 25V angelegt (das ist die Ionisationsschwelle des Heliumatoms). Der Computer 11 steuert eine gepulste Stromversorgungseinheit 13 für die Zündung der Glimmentladung und die Erzeugung des Nachleuchtplasmas. Die Stromversorgungseinheit ist in bekannter Weise aufgebaut, wobei beispielsweise ein Hochspannungstransistorschalter für die Impulsumschaltung der negativen Gleichspannung von 200-600V zur Kathode 5 verwendet wird. Die Häufigkeit der von der Versorgungseinheit 13 ausgehenden Impulse, deren Dauer und Amplitude können auch vom Rechner 11 gesteuert werden. Für den ADU 10 und den DAU 12 werden bekannte Elektronikschaltungen verwendet, die das Schalten der Eingangs- und Abgabesignale nach Bedarf vornehmen können. Als gepulste Energiequelle für die Erzeugung des Plasmas kann auch ein Strom von schnellen, geladenen Teilchen (Elektronen oder Ionen) von einem Beschleuniger oder einem Impulslaser usw. verwendet werden.

Das Messsystem arbeitet in folgender Weise: der Computer 11 startet einen Entladungsstromimpuls von der Versorgungseinheit 13, dann öffnet mit einer Verzögerung nach dem Abschluss des Entladungsimpulses und des Abkühlens des Plasmas zwischen den Elektroden 5, 6 ein Schalter 14, der den Messstromkreis aus dem Widerstand 9, dem ADU 10 und dem DAU 12 schützt. Die Verzögerungszeit beim Einschalten des Schalters 14 sollte nicht die Lebensdauer T der metastabilen Atome unter den gewählten Bedingungen der Entladung überschreiten.

Als Schutzelement 14 kann auch eine Hochspannungsdiode eingesetzt werden, die mit ihrer Anode an die Kathode 5 angeschlossen ist: Dabei wird die Diode bei der hohen negativen Spannung während des Entladungsimpulses der Versorgungseinheit 13 gesperrt, aber sie wird zum Nachleuchten mit der negativen Spannung mit dem DAU 12 eingeschaltet. Nach dem Abschluss von Übergangsvorgängen im Messstromkreis nach dem Einschalten des Schutzelements 14 misst der Computer 11 die Spannung am Widerstand 9 mit Hilfe des ADU 10, und dann kann er den neuen Wert der Spannung am DAU 12 ermitteln. Dieser Vorgang wiederholt sich zyklisch nach jedem Impuls des Entladungsstroms von der Versorgungseinheit 13. Die Daten vom ADU 10 werden vom Computer 11 für jeden ermittelten Wert der Spannung am DAU 12 aufsummiert und gemittelt, so dass auf diese Weise die Strom-Spannungs-Kennlinie gemessen werden kann. Die Registrierung der ganzen Strom-Spannungs-Kennlinie oder eines Teils dieser Kennlinie kann auch nach einem Impuls des Entladungsstroms von der Versorgungseinheit 13 vorgenommen werden. Dazu wird mit Hilfe des ADU 10 eine nötige Anzahl von aufeinander folgenden Messungen des Stroms im Nachleuchten der Impulsentladung bei verschiedenen Werten der Kathoden-Anoden-Spannung vorgenommen, die mittels des DAU 12 und des Computers 11 ermittelt werden. Zwischen jeder Spannungseinstellung mit dem DAU 12 und der darauf folgenden Stromaufzeichnung mit dem ADC 10 sollte eine Zeitverzögerung vorhanden sein, um die Wirkung von Übergangsvorgängen auf die Messgenauigkeit zu vermeiden.

Die charakteristische Energie $E_e$ der Elektronen, die bei der Ionisierung der Verunreinigungen gebildet wird, kann gemäß der Formel (2) im Bereich von 0 bis zur Energie der anregenden Teilchen je nach dem Potential der Ionisierung der Verunreinigung liegen. Die obere Grenze der verwendbaren Energie der anregenden Teilchen kann als Ionisationsenergie des Atoms des Puffergases genommen werden, weil bei Verwendung einer größeren Energie für die anregenden Teilchen die Ionisierung des Grundgases selbst beginnt, und die Verteilungen der Verunreinigungen würden zu kräftig sein, um gegen diesen Hintergrund zu identifizieren. Deshalb kann durch die Messung der Strom-Spannungs-Kennlinie bei einem Bereich der angelegten Spannung von Null bis zum Potential der Ionisierung der Atome des Grundgases mit der Gleichung (8) die Geschwindigkeitsverteilungsfunktion $F(v)$ für Elektronen (sowie die jeweilige Elektronenenergieverteilung $f(E_e)$) und die Anzahl derjenigen Elektronen ermitteln, die durch die Ionisierung einer bestimmten Verunreinigung entstehen. Wenn beispielsweise zweimal die Formel (8) nach U differenziert wird, ergibt sich:

$$F(\sqrt{2eU/m}) = \frac{4m}{e^2 \cdot S \cdot N_e} \cdot U \cdot \frac{d^2 I_e}{dU^2} \qquad (9)$$

Daher ergibt die zweimal differenzierte, gemessene Strom-Spannungs-Kennlinie eine Kurve, die Spitzen enthält, von denen jede einer Gruppe von Elektronen zugehört, die sich bei der Ionisierung der Atome oder der Moleküle einer bestimmten Verunreinigung bilden. Die Energie dieser Elektronen $E_b$ und daher die Lage der entsprechenden Spitzen in der Skala der an die Elektroden angelegten Spannung werden durch die Formel (2) definiert. Die genannte zweifache Differentiation kann mit verschiedenen bekannten Methoden realisiert werden, einschließlich der geraden, numerischen Differentiation der gemessenen Strom-Spannungs-Kennlinie bei der Verwendung von gegebenenfalls verschiedenen, bekannten Datenausgleichsverfahren. Es können auch verschiedene Elektronikschaltungen eingesetzt werden, die eine Modulation der angelegten Spannung mit einem kleinen Wechselsignal U mit der Frequenz w und die Registrierung des Stroms mit der Frequenz w zur Gewinnung der ersten Ableitung oder der Frequenz 2w zur Gewinnung der zweiten Ableitung verwenden.

Nach der Lage der zu beobachtenden Spitzen und nach dem jeweiligen Wert $E_i$ können die Verunreinigungen im Grundgas identifiziert werden. Die bekannten Geschwindigkeitskonstanten $K_{id}$ der Verunreinigungsionisierung durch metastabile Puffergasatome und der Wert des Elektronenstroms $I_{ed}$ mit der Energie $E_p - E_i$ schaffen die partielle Verunreinigungskonzentrationen $N_d$ im Falle der planparallelen Kathode und Anode auf Basis der Gleichung:

$$N_d = I_{ed}/(e \cdot A \cdot k_{id} \cdot N_m \cdot S \cdot L) \qquad (10)$$

wobei $A$ ein dimensionsloser Koeffizient ist, der von der Geometrie der Ionisationskammer abhängt und etwa gleich dem Wert 0,5 ist, der der Tatsache entspricht, dass nur etwa die Hälfte der Elektronen die Kathode erreicht; die andere Hälfte geht an der Anode und in den Wänden der Ionisationskammer verloren. Die Konzentration Nm der metastabilen Atome kann dabei mit bekannten, spektroskopischen Methoden bestimmt werden (zum Beispiel aus den Daten der Absorption der Resonanzausstrahlung oder der Fotoionisierung von der metastabilen Ebene). Dies kann auch dadurch geschehen, dass in der Strom-Spannungs-Kennlinie der Stromwert $I_{e2}$ der Elektronen gesucht wird, die sich bei der Ionisierung im Ergebnis der Zusammenstöße von zwei metastabilen Atomen auf der Basis folgender Gleichung bilden:

$$N_m = \sqrt{I_{e2}/(A \cdot e \cdot k_{i2} \cdot S \cdot L)} \qquad (11)$$

wobei $k_{i2}$ eine Geschwindigkeitskonstante der Stoßionisierung von zwei metastabilen Atomen ist. Die absoluten Konzentrationen der Verunreinigungen können erzeugt werden, indem in die zu untersuchende Mischung die bekannte Verunreinigung mit der vorgegebenen Konzentration eingefügt wird und die Ionisationsströme unter Verwendung der Gleichung (10) verglichen werden.

Eine zusätzliche Ionisierung der Atome oder Moleküle der Verunreinigung im Nachleuchtplasma kann durch neutrale Teilchen von einer äußeren Quelle 15 vorgesehen werden. Diese Teilchen können zum Beispiel Photonen mit einer bestimmten Energie sein, die für die Ionisierung der Verunreinigung ausreichend ist, aber für die Ionisierung des Grundgases nicht ausreichend ist. Als Quelle 15 dieser neutralen Teilchen 16 kann ein Laser oder eine Gasglimmentladung in einem Edelgas verwendet werden. Es ist bekannt, dass eine solche Glimmentladung hauptsächlich Resonanzphotonen erzeugen, die den Übergängen von den schwach angeregten Zuständen in den Hauptzustand des Edelgasatoms entsprechen und über eine ausreichende Energie für die Ionisierung der Verunreinigungen verfügen. Beispielsweise sendet eine Heliumglimmentladung Resonanzphotonen mit einer Energie von etwa 21eV und einer ausreichenden Monochromatizität aus.

Mit diesen Photonen 16 wird das Nachtleuchtplasma ausgestrahlt, und es wird die Verteilungsfunktion der Fotoelektronen F(v) bestimmt, die sich bei der Ionisierung der Verunreinigungen gebildet haben, wie oben beschrieben. Dabei wird die Ionisationskammer gegen das unerwünschte Eindringen von geladenen Teilchen, die von der äußeren Quelle 15 erzeugt werden, dadurch geschützt, dass Elektroden zwischen der Ionisationskammer und dieser Quelle für das Auffangen dieser geladenen Teilchen angeordnet werden oder dass ein nur für Photonen durchlässiges Fenster angeordnet wird. Zwischen der Ionisationskammer und der äußeren Quelle 15 können auch ein Diaphragma zur Bildung des Photonenstroms 16 angebracht werden, wobei die Photonen in den vorgegebenen Bereich der Ionisationskammer gerichtet werden. Dabei kann das Edelgas in der Quelle im Vergleich zum Puffergas in der Ionisationskammer von anderer Art sein.

Für die zusätzliche Ionisierung der Atome oder Moleküle der Verunreinigungen im Nachleuchtplasma können auch als Teilchen 16 die für das Puffergas resonanzfähigen Photonen eingesetzt werden, wenn die Quelle 15 und die Ionisationskammer mit demselben Edelgas gefüllt sind. Dabei wächst die Effektivität der Ionisierung und der Strom der charakteristischen Elektronen mit der Vergrößerung der Lauflänge in der Ionisationskammer dank der Wirkung "des Auffangens der Strahlung" und durch die zusätzliche Ionisierung der Verunreinigungen bei den Zusammenstößen mit den resonanzangeregten Atomen des Grundgases.

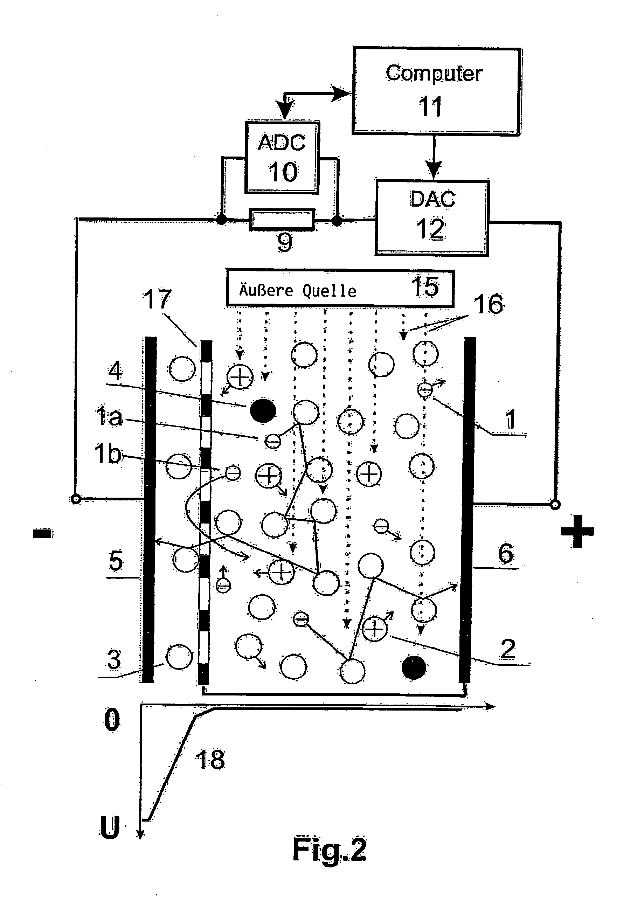

Die in der Erfindung vorgeschlagene Kombination von Feldern in der Ionisationskammer kann (vgl. Fig. 2) gewährleistet werden, indem ein Leitgitter 17 zwischen der Kathode 5 und der Anode 6 angebracht wird und auf das Gitter 17 das gleiche Potential wie auf die Anode 6 gegeben wird, um dazwischen einen Äquipotentialraum zu schaffen. Zwischen dem Gitter 17 und der Kathode 5 sowie an der äußeren Oberfläche der Kathode 5 und der Anode 6 sind Isolatoren eingerichtet, die aus Vereinfachungsgründen in Fig. 2 nicht gezeigt sind. Zwischen der Anode 6 und der Kathode 5 wird eine Spannung angelegt, wobei die Verteilung der Potentiale in der Ionisationskammer der Kurve 18 entspricht. Für die Ionisierung der Atome oder Moleküle, der Verunreinigungen im Raum zwischen dem Gitter 17 und der Anode 6, werden neutrale Teilchen der vorgegebenen Energie eingeführt, zum Beispiel metastabile Atome oder Photonen 16 von der äußeren Quelle 15. Dabei werden Maßnahmen getroffen, die die Ionisierung der Verunreinigungen im Raum zwischen dem Gitter 17 und der Kathode 5 minimieren, dabei wird zur Energie des sich bildenden Elektrons das Potential desjenigen Punktes zwischen dem Netz 17 und der Kathode 5 zugefügt, an dem sich das Elektron gebildet hat, so dass die Energieverteilung dieser Elektronen undeutlich wird. Dazu wird beispielsweise der Strom der neutralen Teilchen so gerichtet, dass sie den Raum zwischen dem Gitter 17 und der Anode 6 durchlaufen und nicht in das Gebiet zwischen dem Gitter 17 und der Kathode 5 gelangen können. Die Konfigurationen der Elektroden 5, 6 und des Gitters 17 können willkürlich sein, vorausgesetzt, dass die Bedingung (4) erfüllt wird. Aber als optimal gilt die Variante, bei der die genannten Elektroden 5, 6 und das Gitter 17 eine flache Form aufweisen und parallel zueinander in einer Entfernung von $L = L_{min}$ angebracht sind. Dabei erfüllen die Elektroden 5 und 6 die Rolle der Wände der Ionisationskammer. In diesem Fall ist das elektrische Feld zwischen dem Gitter 17 und der Kathode 5 gleichmäßig, und das "tote" Volumen der Ionisationskammer ist minimal. Dabei bewegen sich die Elektronen und die Ionen nach der Ionisierung im Äquipotentialraum zwischen der Anode 6 und dem Gitter 17 sowie im gleichartigen elektrischen Feld zwischen dem Gitter 17 und der Kathode 5 ähnlich wie die Bewegungen zwischen der Ebenen 6 und 7 und der Ebene 7 und 5 in der Plasmaentladung in Fig. 1. Aus diesem Grunde kann hier auch die Formel (9) verwendet werden, um aus der Strom-Spannungs-Kennlinie die Anzahl der Elektronen mit der bestimmten, charakteristischen Energie zu ermitteln, die bei der Ionisierung der Atome oder Moleküle der Verunreinigungen entstehen. Bei der Verwendung von Photonen für die Ionisierung wird die Konzentration der ermittelten Konzentrationen aus ihren bekannten Durchschnitten $\sigma_{ip}$ der Fotoionisierung, aus dem gemessenen Photonenstrom J und aus der Lauflänge D der Photonen im Raum zwischen der Anode 6 und dem Gitter 17 ermittelt:

$$N_d = I_{ed}/(e \cdot A \cdot \sigma_{ip} \cdot J \cdot D) \qquad (12)$$

Der Koeffizient A sollte zusätzlich mit dem Koeffizient der Durchlässigkeit des Gitters 17 multipliziert werden. Der Detektor kann auch geeicht werden, indem dem Puffergas eine bekannte Verunreinigung mit der vorgegebenen Konzentration zugefügt wird.

Im Unterschied zu dem Plasma, bei dem der Strom nur im Nachleuchten und nur gemessen werden kann, solange der Debey-Länge des Plasmas (5) viel geringer als die charakteristischen Abmessungen der Ionisationskammer ist, kann bei dieser Variante der Strom die ganze Zeit ununterbrochen gemessen werden, solange die Ionisierung der Atome oder Moleküle der Verunreinigungen bei der Bestrahlung mit den neutralen Teilchen 16 erfolgt.

Gemäß der vorliegenden Erfindung können für die Ionisierung der Atome oder Moleküle der Verunreinigungen Photonen verwendet werden, die für die Atome des Puffergases resonanzfähig sind. Dabei wächst die Wirkung der Ionisierung aufgrund der Vergrößerung der Lauflänge des Photons in der Ionisationskammer und der zusätzlichen Ionisierung der Verunreinigungen aufgrund der Zusammenstöße mit den resonanzangeregten Atomen des Grundgases.

Außerdem kann sich bei der intensiven Ionisierung der Verunreinigungen im Raum zwischen dem Gitter 17 und der Anode 6 eine wesentliche Volumenladung von positiven Ionen bilden, die es nicht schaffen, an den Wänden und den Elektroden der Ionisationskammer zu rekombinieren. Diese Raumentladung verletzt die Aquipotentialität in dieser Region und führt zu einer Verfälschung (Verschiebung und Verwischung) der Energieverteilung der Fotoelektronen. Um dies zu vermeiden, kann der Computer 11 den Strom zur Kathode 5 steuern, wobei er im Moment der Einschaltung der Ionisierung 15 beginnt. Wenn dieser Strom im Laufe eines bestimmten Intervalls die vorgegebene Grenze überschreitet, so wird die Ionisierung im Raum zwischen dem Netz 17 und der Anode 6 unterbrochen, wobei zum Beispiel die Quelle 15 abgeschaltet wird. Dann wird mit Hilfe von elektrischen Schaltern an die Anode 6 ein negatives Potential angelegt, das dem Potential der Kathode 5 ähnlich ist, in Bezug auf das Gitter 17 bis zum Moment der Entfernung der Ionen aus dem Raum zwischen den Elektroden. Dann wird die Ionisierung wieder aufgenommen, indem in gesteuerter Weise der Strom der Photonen von der Quelle 15 verringert wird. Der angegebene Schwellwert für die Stromsteuerung wird durch die Konzentration der Ionen im Raum zwischen dem Gitter 17 und der Anode 6 bestimmt, bei der die Raumentladung ein vorgegebenes Niveau des störenden, elektrischen Felds in diesem Raum vorsieht. Dieser Schwellwert kann theoretisch berechnet werden oder experimental aus dem gewählten Signalstörpegel einer bekannten Verunreinigung ausgewählt werden.

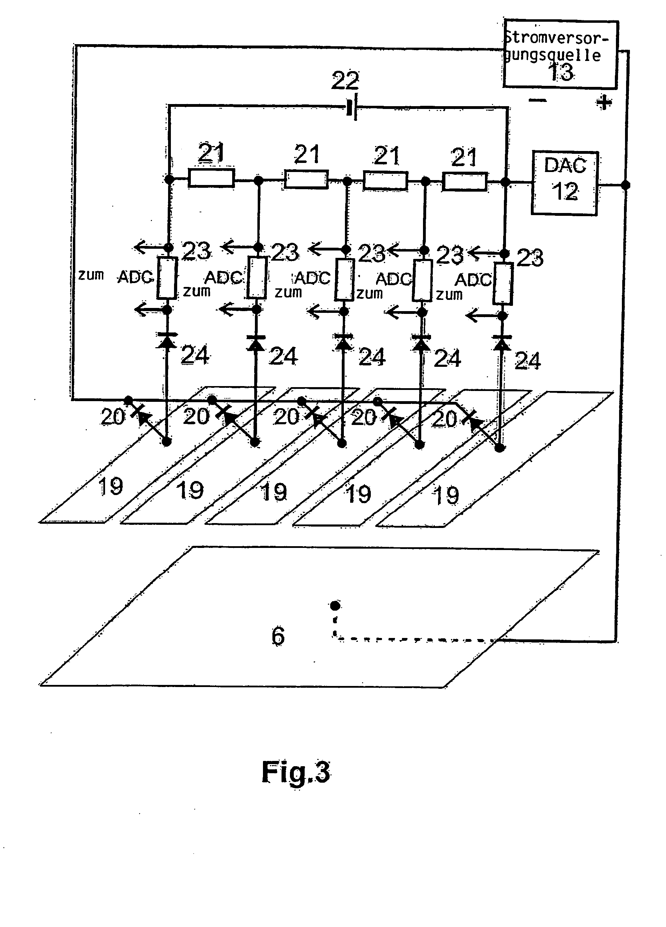

Wie am Beispiel der Fig. 3 gezeigt ist, kann die Kathode 5 in der Ionisationskammer mit dem Nachleuchplasma aus einigen (N) voneinander isolierten Segmenten 19 gebildet werden. Die Spannung für die Zündung der Glimmentladung von der gepulsten Stromversorgungseinheit 13 wird an jedes Segment 19 über Dioden 20 angelegt, um beim Nachleuchten den Strom an jedem der Segmente 19 individuell zu messen. Dabei wird an jedes der Segmente 19 beim Nachleuchten ein individueller Wert der Spannung angelegt, der sich aus der Ausgangsspannung des DAU 12 und dem Spannungsteiler aus Widerständen 21 zusammensetzt, der an einer Stromversorgungsquelle 22 angeschlossen ist. Die Nennwerte der Widerstände 21 können derart gewählt werden, dass die Differenz der Potentiale zwischen den benachbarten Segmenten 19 dem ausgewählten Schritt der Messung der Strom-Spannungs-Kennlinie entspricht, wobei die Verfälschungen des elektrischen Felds an der Grenze zwischen den benachbarten Segmenten minimal sein werden. Der Strom von der Kathode 5 verursacht an Belastungswiderständen 23 Spannungsabfälle, die z.B. mittels eines Satzes von Analog-Digital-Umsetzern oder mit einem Satz von Auswahl-Speicherschaltungen gemessen werden, die an einen Mehrkanalanalogmultiplexer und weiter an den ADU angeschlossen sind, der nacheinander die Signale dieser Auswahl-Speicherschaltungen bearbeitet. Der Anschluss an die Analog-Digital-Umsetzer (oder Auswahl-Speicherschaltungen) ist in Fig. 3 durch Pfeile gezeigt. Dioden 24 dienen zum Schutz der Messschaltkreise vor der Impulsspannung von der Versorgungseinheit 13. Eine mögliche Verschiebung der Strom-Spannungs-Kennlinie durch den Spannungsabfall an den Widerständen 21 kann auf der Basis des Ohmschen Gesetzes aufgrund der bekannten Werte der Widerstände 21 und 23 berücksichtigt werden. In dieser Weise können gleichzeitig einige Punkte auf der Strom-Spannungs-Kennlinie je Stromimpuls von der Einheit 13 gewonnen werden, und die Analysengeschwindigkeit kann um das N-fache vergrößert werden. Wenn eine ausreichende Anzahl von Segmenten 19 angebracht ist und Spannungswerte angelegt sind, die den ausgewählten Bereichen des Energiespektrums der Elektronen entsprechen, kann die Analyse der Verunreinigungen sogar je Zyklus der Entladung durchgeführt werden.

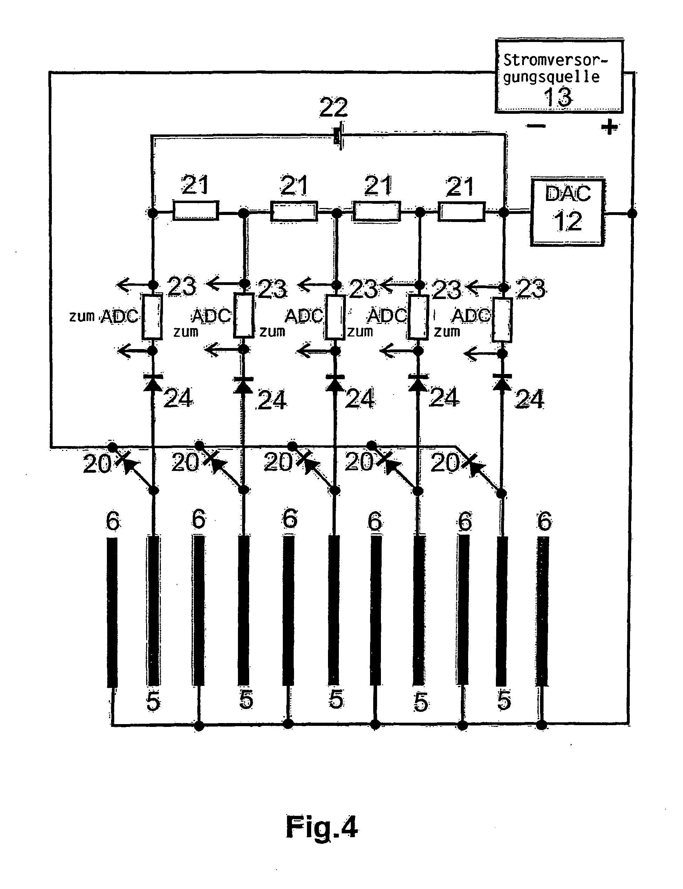

Es ist auch möglich, in der Ionisationskammer N Paare der Kathode 5/Anode 6 anzubringen, wie in der Fig. 4 gezeigt ist. An jede Kathode 5 wird eine individuelle Spannung angelegt, um individuelle Stromwerte beim Nachleuchten aufzuzeichnen, wobei alle Anoden 6 miteinander verbunden werden. Zwischen den Kathoden 5 und den Anoden 6 sowie an der äußeren Oberfläche der am Rande liegende Elektroden sind Isolatoren angeordnet, die aus Vereinfachungsgründen in Fig. 4 nicht gezeigt sind. Wenn es erforderlich ist, die Abmessungen eines solchen Detektors zu verringern, kann jede der Kathoden 5 in Form von zwei metallischen Schichten mit einer dielektrischen Dichtung dazwischen derart ausgeführt werden, dass jede der genannten metallischen Schichten die Funktion der einzelnen Kathode mit dem daran individuell angeschlossenen Schaltkreis erfüllen kann.

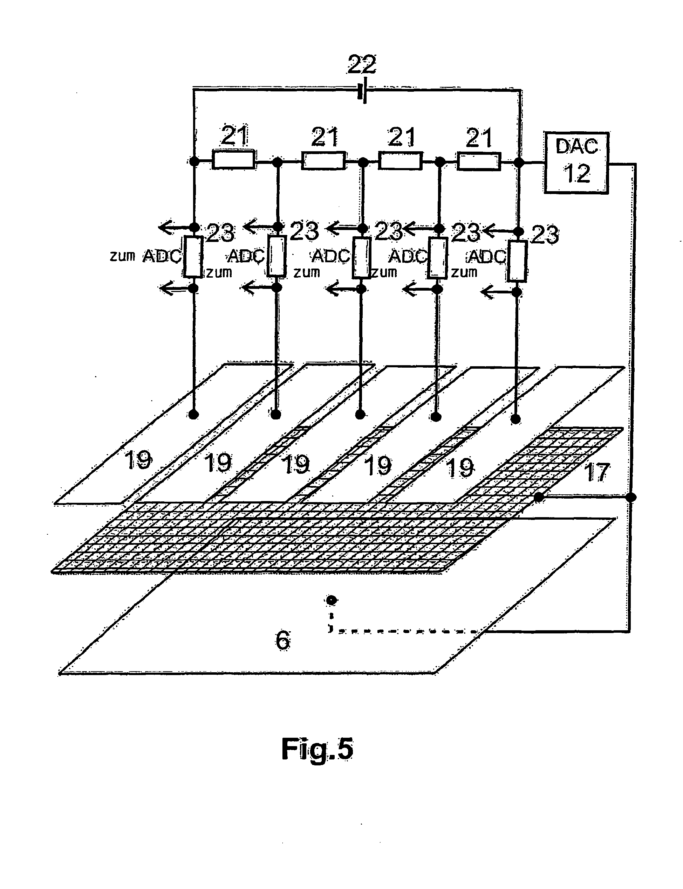

In Fig. 5 ist die Ionisationskammer gezeigt, in der zwischen der aus N Segmenten 19 bestehenden Kathode und der Anode das Gitter 17 für die Analyse der Elektronen angebracht ist, die sich im Abstand zwischen der Anode 6 und dem Gitter 17 bei der Einwirkung der Teilchen von der äußeren Quelle 15 (in Fig. 5 nicht gezeigt) bilden, ähnlich der in Fig. 2 gezeigten Variante für ein Paar Kathode 5/Anode 6. Dies erlaubt auch die Erhöhung der Analysengeschwindigkeit um das N-fache.

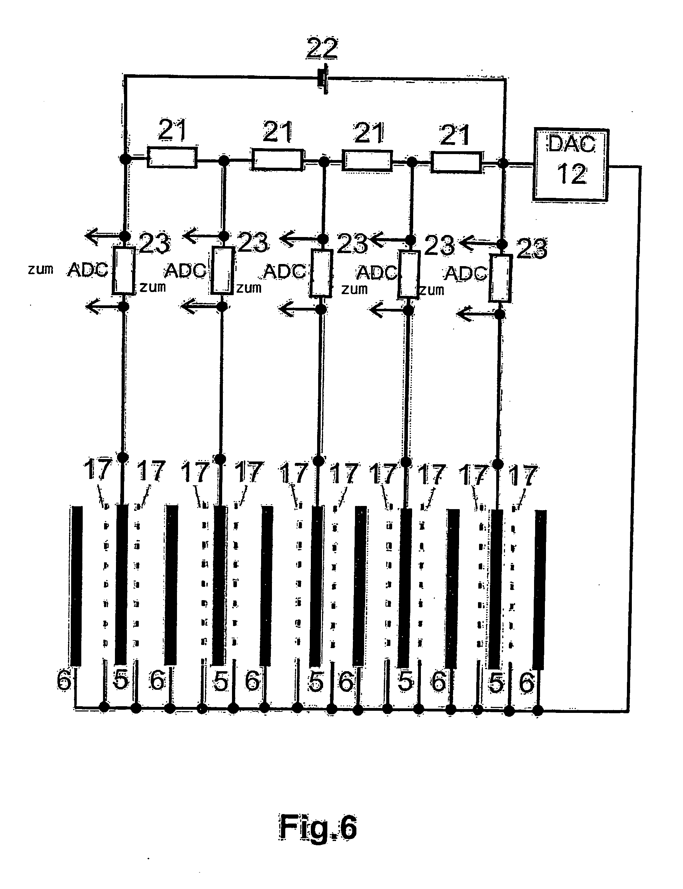

In Fig. 6 ist die Ionisationskammer gezeigt, in der zwischen den N Paaren Kathode 5 /Anode 6 die Gitter 17 für die Analyse der Elektronen angebracht sind, die sich im Abstand zwischen der Anode 6 und dem Gitter 17 bei der Einwirkung der Teilchen von der äußeren Quelle 15 (in Fig. 6 nicht gezeigt) bilden, ähnlich der in Fig. 2 gezeigten Variante für ein Paar Kathode/Anode. Um die Abmessungen des Detektors zu vermindern, können die Kathoden in Form von Isolierstoff mit einer zweiseitig metallisierten Oberfläche ausgeführt werden, wie für die Variante in Fig. 4 beschrieben ist.

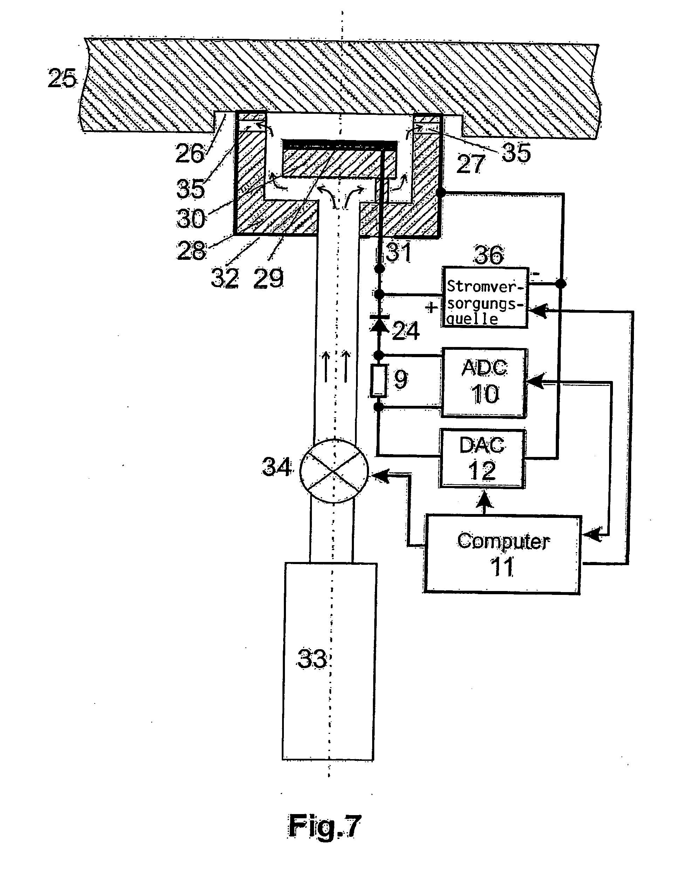

Wie in Fig. 7 gezeigt ist, kann das Material eines Probentargets 25 als Verunreinigung analysiert werden, wenn dieses Probentarget unter der Einwirkung der zusätzlichen Energiequelle atomisiert wird. Dazu wird im Probentarget 25 eine flache, zylindrische Vertiefung 26 (z. B. mit einem Fräser) gebildet und darauf das Gehäuse eines Analysators 27 angebracht, das aus Isoliermaterial besteht. Im Gehäuse des Analysators 27 ist eine zylindrische Elektrode 29 mit einer flachen Stirnseite angebracht, die der Oberfläche der Vertiefung 26 zugewandt ist. Die entgegengesetzte Stirnseite der Elektrode 29 ist mit einem Isolator 30 beschichtet, durch den ein isolierter, elektrischer Anschluss 31 ragt, der außerhalb des Gehäuses des Analysators 27 herausgeführt ist. Von außen ist das Gehäuse des Analysators 27 einschließlich der Oberfläche, die die Vertiefung 26 kontaktiert, mit einer metallischen Hülle 32 beschichtet. An das Gehäuse des Analysators 27 ist ein Behälter 33 mit Puffergas über ein Reduzierventil 34 angeschlossen. Das Puffergas, z. B. Helium oder Neon, wird unter einem überschüssigen Druck in das Gehäuse des Analysators 27 geleitet und strömt über Öffnungen 35 im Gehäuse des Analysators nach draußen, wie mit Pfeilen gezeigt ist. Dabei werden aus dem Zwischenraum zwischen der Elektrode 29 und der Oberfläche der Vertiefung 26 atmosphärische Gase durch den Puffergasstrom verdrängt, der die erforderliche Fließgeschwindigkeit hat. Dieser Puffergasstrom behindert das rückwärtige Gelangen der atmosphärischen Gase in den genannten Zwischenraum.

Als zusätzliche Energiequelle zur Atomisierung des Probentargets 25 kann dessen thermische Erwärmung an der Oberfläche, eine Laserbestrahlung oder als einfachstes Verfahren eine gepulste Glimmentladung verwendet werden, bei der die Vertiefung 26 die Rolle der Kathode in der zu untersuchenden Probe erfüllt. Der Elektrode 29 wird dabei ein derartiger Spannungimpuls mit positiver Polarität von der Versorgungseinheit 36 zugeleitet, dass die Stromdichte bei der Entladung für die Schaffung der für das Detektieren erforderlichen Konzentration der Probenatome in einem Abstand zwischen der Elektrode 29 und der Vertiefung 26 ausreichend sein sollte. Die Diode 24 ist in diesem Moment gesperrt und schützt den Messstromkreis, der aus dem Widerstand 9 und dem Verstärker mit dem ADU 10 und dem DAU 12 besteht, vor dem Spannungsimpuls der Einheit 36. Mit der Zeitverzögerung nach dem Beenden des Stromimpulses von der Einheit 36, wobei die Zeitverzögerung die Lebensdauer der besprühten Probenatome im Hinblick auf ihr Absetzen an den Wänden und Elektroden des Analysators nicht überschreitet, wird an die Elektrode 29 die positive Spannung vom DAU 12 unter Steuerung des Rechners 11 angelegt. Die Schutzdiode 24 öffnet, und es wird Strom auf die Elektrode 29 mit Hilfe des Widerstands 9 und des Verstärkers mit dem ADU 10 gemessen. Der Rechner 11 steuert auch die gepulste Stromversorgungseinheit 36 und das Reduzierventil 34. Nach der Einschaltung des Puffergasstroms werden einige Stromimpulse von der Versorgungseinheit 36 erzeugt, um die Oberfläche der Vertiefung 26 von den absorbierten, atmosphärischen Gasen und Verschmutzungen zu reinigen, die durch das Werkzeug bei der Bildung des flachen Platzes 26 verursacht werden, und dann fängt die Messung der Strom-Spannungs-Kennlinie an. Wenn in der Mischung, die sich im Raum zwischen der Elektrode 29 und der Vertiefung 26 gebildet hat,

1. die geladenen Teilchen mit solchen Konzentrationen und Temperaturen enthalten sind, dass gemäß der Formel (5) die Debey-Länge genügend niedrig ist,
2. die Konzentration der metastabilen Puffergasatome für das sichere Detektieren der Elektronen mit der charakteristischen Energie nach der Einwirkung der zusätzlichen Energiequelle 36 ausreichend ist,

so kann die Zusammensetzung der Verunreinigungen ermittelt werden, wie oben anhand der Fig. 1 beschrieben ist. Wenn eine der aufgezählten Bedingungen nicht erfüllt ist, so kann in der genannten Mischung die zusätzliche, gepulste Glimmentladung gezündet werden, um diese Bedingungen zu erreichen. So kann die genannte Mischung der Einwirkung der Photonen oder der metastabilen Atome unterzogen werden und die Analyse nach dem oben beschriebenen Schema mit zwei Elektroden und dem Gitter vorgenommen werden. Dabei soll die Zuleitung der zu analysierenden Mischung in die Ionisationskammer genügend schnell sein, damit die Zeitverzögerung zwischen dem Prozess der Besprühung der Probe und der Analyse der Zusammensetzung die Lebensdauer der Atome der besprühten Verunreinigungen im Puffergas im Hinblick ihres Absetzens an den Wanden nicht überschreitet.

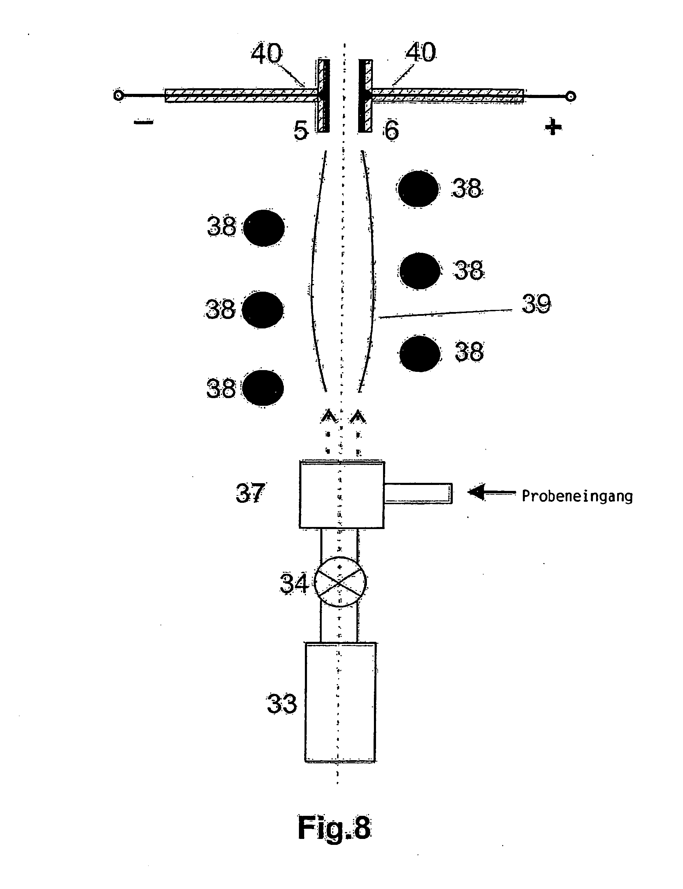

In Fig. 8 ist ein Schema für die Analyse der Elementzusammensetzung einer flüssigen oder gasförmigen Probe dargestellt. Der Strom des Puffergases, in der Regel ein Edelgas, gelangt aus dem Behälter 33 über einen Druckregler mit einem Reduzierventil 34 in eine Mischeinheit 37, in der es sich mit dem Strom der zu analysierenden Probe vermischt, deren Zufuhr mit einem Pfeil gezeigt ist. Weiterhin wird, wie mit punktierten Pfeilen gezeigt ist, der Strom der Mischung über eine Achse einer Spule eines Generators zur induktivitätsgebundenen Plasmaerzeugung (ICP) bekannten Konstruktion (mit gestrichelten Linien gezeigt) zugeführt, wobei Windungen 38 dieser Spule im Schnitt gezeigt sind. Der Puffergasstrom aus der Mischeinheit 37 soll eine Geschwindigkeit aufweisen, die dafür ausreichend ist, das Gelangen von atmosphärischem Gas in das Vorachsgebiet der Spule zu verhindern. Der ICP-Generator zur Erzeugung eines induktivitätsgebundenen Plasmas erzeugt innerhalb der Spulenwindungen 38 eine hochfrequente Entladung solcher Kapazität, dass das Puffergas im Vorachsgebiet die Temperatur von mehreren tausend Grad erreicht und die thermische Zerlegung der Probenmoleküle in Atome gewährleistet. Die Zone der hohen Temperatur ist mit dem Umriss 39 in Fig. 8 gezeigt. Weiterhin werden unten im Strom mindestens ein Paar Kathode 5/Anode 6 angebracht und an eine Messschaltung ähnlich der anhand der Figuren 1, 3 und 4 beschrieben angeschlossen, die in Fig. 8 nicht gezeigt ist. Stattdessen kann ein Paar aus Elektroden 5, 6 mit dem Gitter zwischen diesen Elektroden nach dem Schema angeordnet werden, das den Schemen in den Figuren 2, 5 und 6 ähnlich ist. Die Entfernung zwischen der Zone 39 und den Elektroden 5, 6 wird derart ausgewählt, dass einerseits die Temperatur des Stroms im Bereich der Elektroden genügend absinken kann, um deren Zerstörung zu vermeiden, und andererseits die Probeatome nicht in Moleküle zu rekobinieren. Die Elektroden werden aus einem chemisch inerten Metall ausgeführt, das hohe Temperatur aushalten kann. Die äußeren Oberflächen der Elektroden und die Zuleitungsleitungen werden mit Hilfe von Keramikisolatoren 40 geschützt. Die Messung der Strom-Spannungs-Kennlinie und die Bestimmung der Zusammensetzung der Probe nach der Atomisierung werden gemäß einer der beschriebenen Varianten mit den Erläuterungen zu den Figuren 1-6 vorgenommen. Außerdem kann eine Mikrowellenentladung elektromagnetische Störungen in den Messschaltungen für die Strom-Spannungs-Kennlinie hervorrufen; um die Störungen zu beseitigen, kann ein Regime aus periodischen Impulsen des ICP-Generators und eine Messung des Stroms zu den Elektroden 5, 6 in den Abständen zwischen den Impulsen des Generators verwendet werden.

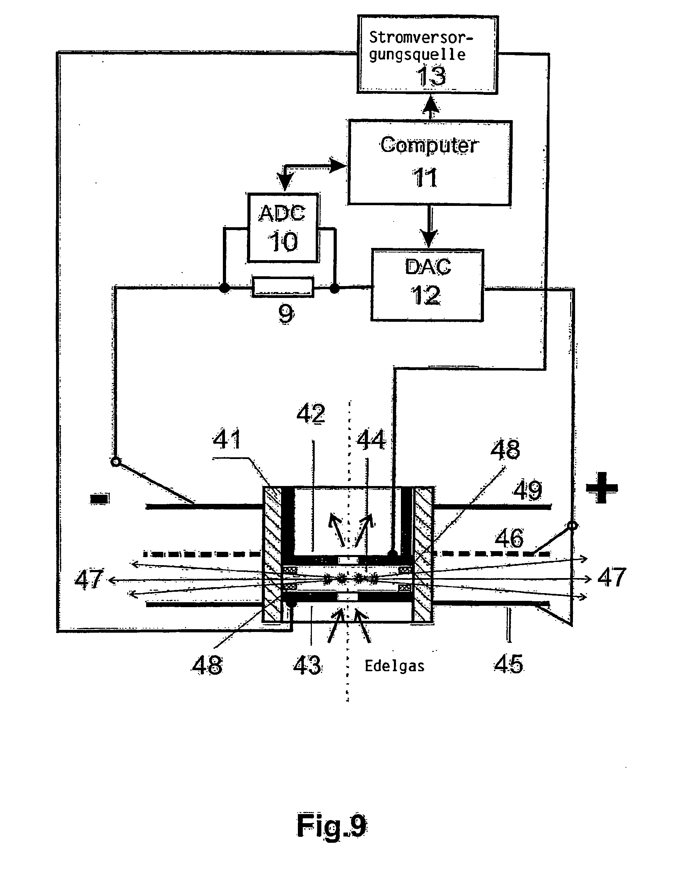

In Fig. 9 ist ein Schema für die Fotoionisationsanalyse von Gasverunreinigungen der Gasmischungen in der Luftatmosphäre mit Hilfe einer Gasglimmentladungs-UV-Strahlungsquelle gezeigt. Die Gasentladungskammer der Strahlungsquelle besteht aus einem Fenster 41 in zylindrischer Form, das im Bereich des Vakuumultraviolettlichts durchlässig ist, zum Beispiel bis zu einer Energie der Photonen von 11,6eV. Als Material des Fensters kann zum Beispiel LiF verwendet werden. Die Impuls- oder ständige Entladung wird zwischen planparallelen, zylindrischen Elektroden 42 und 43 gezündet. In der Gasentladungskammer befindet sich oder wird durch Durchpumpen, wie mit Pfeilen gezeigt, Edelgas, zum Beispiel Ar oder eine Mischung aus Ar und He, zugeführt. Das Durchpumpen kann für die Stabilität der Zusammensetzung der Arbeitsmischung und für die Ableitung der überflüssigen Wärme verwendet werden. Die Glimmentladungsparameter werden derart ausgewählt, dass die Edelgasatome vorzugsweise Resonanzphotonen mit der Energie von etwa 11eV sind und mit einer ausreichend kleinen Bandbreite ausstrahlen. Der Druck in der Entladungskammer kann im Bereich von 102 Pa bis zum atmosphärischen Druck liegen. Bei hohem Druck erlaubt eine Ergänzung mit He als Puffergas eine Verringerung der Bildungsgeschwindigkeit der Ar-Eximermoleküle, die in einem breiten Band des Vakuumultraviolettlichts ausstrahlen und die Monochromatität der photoionisierenden Strahlung verschlechtern. Die die Glimmentladung hervorrufende Spannung kann etwa 300-500V betragen und der Strom kann etwa 100mA betragen. Der Abstand zwischen den Elektroden kann auch aufgrund der Bedingung (4) ausgewählt werden, wobei in diesem Fall die Entladung I bei Druckverhältnissen bis zum atmosphärischen Druck stabil ist. Die Versorgungseinheit 13 der Glimmentladungsquelle arbeitet entweder im Dauer- oder im Impulsbetrieb, um die Ableitung der Wärme zu gewährleisten und den Anteil der angeregten Ar-Atome zu verringern, die sich unter Steuerung des Rechners 11 in die Eximermoleküle umwandeln. Die Energie der Ar-Resonanzphotonen ist für die Ionisierung vieler Moleküle ausreichend, die in atmosphärischer Luft als Verunreinigungen detektieren werden müssen, aber diese Energie ist nicht ausreichend, um die wesentlichen Bestandteile der Luft, nämlich $O_2$ und $N_2$, zu ionisieren. Deshalb wird hauptsächlich der Strom der Fotoelektronen durch die Ionisierung der Verunreinigungen bestimmt, so dass die Detektorempfindlichkeit verstärkt wird. In der vorgeschlagenen Vorrichtung werden die Ar-Strahlungslinien mit einer Energie, die 11,6eV überschreitet, vom Fenster absorbiert, und die Linien mit einer Energie von weniger als 11,6eV, die aber ausreichend für die Fotoionisierung der Moleküle ist, fehlen im Ar-Spektrum. Deshalb verfügt die genannte photoionisierende Ausstrahlung über die erforderliche Monochromatizität. Es ist auch möglich, eine Entladung mit anderen Edelgasen und ihren Verunreinigungen zur Gewinnung von Strahlungen vorzugsweise von Resonanzphotonen im Bereich desr Vakuumultraviolettlichts mit unterschiedlicher Energie, zum Beispiel ein reines Neon (bei Verwendung des Fensters, das für die Ne-Resonanzstrahlung durchlässig ist) oder Krypton oder eine Mischung dieser Gase mit He. Der Resonanzphotonenstrom gelangt aus einem Gebiet 44, in dem die Glimmentladung stattfindet, durch das Fenster 41 in den Raum zwischen einer Anode 45 und einem Gitter 46, die beide die Form von Ringen aufweisen und koaxial zur Glimmentladungskammer angebracht sind. Die Anode 45 und das Gitter 46 sind parallel zueinander angebracht und elektrisch untereinander zur Bildung des Äquipotentialraums verbunden. Eine Laufbahn 47 der Photonen (mit Pfeilen gezeigt) im Gebiet zwischen der Anode 45 und dem Gitter 46 wird durch ringförmige, dielektrische Diaphragmen 48 begrenzt. Dadurch gelangen die Photonen nicht auf die Oberfläche der Elektroden 45 und 46 und rufen damit nicht einen unerwünschten Photostrom hervor. Zwischen den Elektroden 45 und 46 erfolgt die Fotoionisierung der Verunreinigungsmoleküle in der Luft, wobei die Fotoelektronen in den Raum zwischen der Anode 45 und dem Gitter 46 diffundieren, und ein Teil davon gelangt in den Raum zwischen dem Gitter 46 und der Kathode 49, in dem ihre Analyse nach Energie im elektrischen Feld erfolgt, wie oben anhand der Fig. 2 beschrieben ist. Der Fotoelektronenstrom zur Kathode 49 wird mit Hilfe des Widerstands 9 und dem ADU 10 unter Steuerung des Rechners 11 gemessen. Eine Abtastung der Spannung zwischen der Kathode 49 und dem Gitter 46 erfolgt mit Hilfe des DAU 12. Der Abstand zwischen den Elektroden 45, 46 und 49 wird derart gewählt, dass die Energieverluste durch die Elektronen bei den Zusammenstößen mit den Molekülen der Luft vor der Rekombination an den genannten Elektroden den vorgegebenen Pegel nicht überschreiten, zum Beispiel aufgrund der Bedingung (4). Für die Luft unter atmosphärischem Druck kann der Abstand zwischen den genannten Elektroden etwa 0,1 mm betragen.

Die vorliegende Erfindung kann für die Analyse einer ziemlich willkürlichen Gasmischung zum Einsatz kommen, wobei in die Mischung ein jeweiliges, reines Puffergas solange zugefügt wird, bis die Ausgangsmischung als Verunreinigung zum zugefügten Puffergas betrachtet werden kann. Diese Erfindung kann auch für die Analyse von fertigen Gasmischungen verwendet werden, die sich bei der Bestimmung der Zusammensetzung von Festkörpern und Flüssigkeiten bilden. Für die Verwirklichung der Erfindung werden bekannte, in der Literatur beschriebene, elektronischen Elemente (Mikroprozessoren, ADU, DAU), bekannte Gasvorrichtungen und auch bekannte Materialien für die Herstellung der Elektroden und der Detektorteiles verwendet.

## Patentansprüche

1. Verfahren zum Analysieren von Verunreinigungen in einem Grundgas, das eine Ionisierung der Verunreinigungsatome und -moleküle aufweist, die mit Teilchen definierter Energie (4) in einer Ionisationskammer kollidieren, wobei der elektrische Strom zwischen mindestens zwei in der Ionisationskammer angeordneten Elektroden (5, 6) als Funktion der an diese beiden Elektroden (5, 6) angelegten Spannung gemessen wird,
   **gekennzeichnet durch** folgende Schritte:

   - der Grundgasdruck und der Aufbau der Ionisationskammer werden derart gewählt, dass der Abstand zwischen einem beliebigen Punkt in der Ionisationskammer und der nächstliegenden Kammerwand oder einer der Elektroden (5, 6) geringer als die mittlere Verschiebung eines Elektrons ist, bevor dieses einen vorgegebenen Teil seiner kinetischen Energie verliert,
   - ein Äquipotentialraum wird in demjenigen Bereich der Ionisationskammer vorgesehen, in dem die ionisierungskollisionen auftreten,
   - die Stromabhängigkeit von der Spannung, die an den zwischen den Elektroden (5, 6) liegenden Spalt angelegt wird, wird dazu verwendet, diejenige Menge von Elektronen mit charakteristischen Energien festzustellen, die bei der Ionisation der genannten Atome oder Moleküle erzeugt wird, wobei die Verunreinigungen im Grundgas **durch** die Parameter dieser Elektronen festgestellt werden.

2. Verfahren nach Anspruch 1,
   **dadurch gekennzeichnet,**
   **dass** ein Edelgas als Grundgas verwendet wird.

3. Verfahren nach Anspruch 2, **dadurch gekennzeichnet, dass** das Grundgas Helium ist.

4. Verfahren nach einem der Ansprüche 1 bis 3,
   **dadurch gekennzeichnet,**
   **dass** der Grundgasdruck im Bereich von $10\text{-}10^5$ Pa und mehr liegt.

5. Verfahren nach einem der Ansprüche 1 bis 4,
   **dadurch gekennzeichnet,**
   **dass** die an die beiden Elektroden (5, 6) angelegte Spannung zwischen Null und dem Ionisationsschwellwert des Grundgases geändert wird und dass die Elektronenmenge mit den charakteristischen Energien aus der zweiten Ableitung der Abhängigkeit des elektrischen Stroms von der angelegten Spannung bestimmt wird.

**6.** Verfahren nach einem der Ansprüche 1 bis 5,
**dadurch gekennzeichnet,**
**dass** der Äquipotentialraum im Ionisationskammerbereich **dadurch** geschaffen wird, dass eine gepulste Stromversorgungsquelle verwendet wird, um ein Nachleuchtplasma in der Ionisationskammer zu erzeugen, dass die Verunreinigungsatome oder -moleküle bei der Kollision mit metastabilen Atomen (4) oder Molekülen des Grundgases ionisiert werden, wobei die letztgenannten Atome (4) oder Moleküle unter der Wirkung einer gepulsten Stromversorgungsquelle (13) erzeugt werden, dass der Strom mit einer Zeitverzögerung gemessen wird, die auf die Pulswirkung der Stromversorgungsquelle (13) folgt, und dass die Konzentration und die Temperatur der geladenen Teilchen im Nachleuchtplasma zur Zeit der Messung derart bemessen werden, dass die Debye-Länge viel kleiner als die Abmessungen der Ionisationskammer ist.

**7.** Verfahren nach Anspruch 6,
**dadurch gekennzeichnet,**
**dass** eine gepulste Glimmentladung, die zwischen den beiden Elektroden (5, 6) gezündet wird, als gepulste Stromversorgungsquelle (13) verwendet wird.

**8.** Verfahren nach Anspruch 6,
**dadurch gekennzeichnet,**
**dass** eine gepulste Laserstrahlung als gepulste Stromversorgungsquelle (13) verwendet wird, um Plasma im Spalt zwischen den beiden Elektroden (5, 6) zu erzeugen.

**9.** Verfahren nach einem der Ansprüche 6 bis 8,
**dadurch gekennzeichnet,**
**dass** die Atome oder Moleküle der Verunreinigungen bei der Bestrahlung des Nachleuchtplasmas durch Photonen vorgegebener Energie von der äußeren Quelle (15) ionisiert werden.

**10.** Verfahren nach Anspruch 9,
**dadurch gekennzeichnet,**
**dass** Atome oder Moleküle der Verunreinigungen bei der Bestrahlung durch die Photonen ionisiert werden, die für die Atome oder Moleküle des Grundgases resonanzfähig sind.

**11.** Verfahren nach einem der Ansprüche 1 bis 10,
**dadurch gekennzeichnet,**
**dass** die genannten Elektroden (5, 6) in flacher Form und parallel zueinander angeordnet sind und gleichzeitig die Rolle der Wände in der Ionisationskammer erfüllen.

**12.** Verfahren nach einem der Ansprüche 1 bis 11,
**dadurch gekennzeichnet,**
**dass** in der Ionisationskammer N isolierte Kathoden (5) angebracht werden, dass jede Kathode (5) ein individueller Spannungswert bezüglich einer oder einigen Anoden (6) zugeleitet wird, dass der Strom an jeder der genannten N Kathoden (5) gemessen wird und dass nach der Gesamtheit der gemessenen Werte die Anzahl der Elektronen mit den charakteristischen Energiewerten ermittelt wird, die bei der Ionisierung der erwähnten Atome oder Moleküle der Verunreinigungen entstehen.

**13.** Verfahren nach einem der Ansprüche 1 bis 5,
**dadurch gekennzeichnet,**
**dass** ein Leitgitter (17) zwischen den genannten Elektroden (5, 6) angebracht ist und elektrisch mit der Anode (6) zur Bildung des Äquipotentialraums dazwischen verbunden wird und dass die Atome oder Moleküle der Verunreinigungen bei der Bestrahlung des Raumes zwischen dem Gitter (17) und der Anode (6) mit neutralen Teilchen (16) der vorgegebenen Energie aus der äußeren Quelle (15) ionisiert werden.

**14.** Verfahren nach Anspruch 13,
**dadurch gekennzeichnet,**
**dass** die genannten Elektroden (5, 6) und das Gitter (17) in einer flachen Form verwendet und parallel zueinander angeordnet werden, wobei die genannten Elektroden (5, 6) gleichzeitig als Wände der Ionisationskammer verwendet werden.

**15.** Verfahren nach Anspruch 13 oder 14,

**dadurch gekennzeichnet,**
**dass** die Atome oder Moleküle der Verunreinigungen bei der Bestrahlung mit Photonen ionisiert werden, die für die Atome oder Moleküle des Grundgases resonanzfähig sind.

**16.** Verfahren nach einem der Ansprüche 13 bis 15,
**dadurch gekennzeichnet,**
**dass** die auf die Kathode (5) gelangende Ladung gesteuert wird, dass bei der Überschreitung eines vorgegebenen Werts dieser Ladung die genannte äußere Quelle(15) ausgeschaltet wird, dass ein elektrisches Feld bis zur Entfernung der geladenen Teilchen aus dem Raum zwischen den Elektroden (5, 6) angelegt wird und dass dann die äußere Quelle (15) eingeschaltet und die Messung des Stroms wieder aufgenommen wird.

**17.** Verfahren nach einem der Ansprüche 13 bis 16,
**dadurch gekennzeichnet,**
**dass** in der Ionisationskammer N isolierte Kathoden (5) angebracht werden, dass jeder Kathode (5) ein individueller Spannungswert bezüglich einer oder mehrerer Anoden (6) und jeweils einem oder mehreren Gittern (17) zugeleitet wird, dass der Strom individuell an jeder der genannten N Kathoden (5) gemessen wird und dass nach der Gesamtheit der gemessenen Werte die Anzahl der Elektronen mit den charakteristischen Energiewerten, die bei der Ionisierung der erwähnten Atome oder Moleküle der Verunreinigungen entstehen, ermittelt wird.

**18.** Verfahren nach einem der Ansprüche 1 bis 17,
**dadurch gekennzeichnet,**
**dass** als Verunreinigung die Zusammensetzung des Materials eines Probetargets (25) eingesetzt wird, das durch die Einwirkung der zusätzlichen Energiequelle atomisiert wird, wobei die gebildeten Verunreinigungen mit dem Grundgas gemischt und in die Ionisationskammer geliefert werden.

**19.** Verfahren nach Anspruch 18,
**dadurch gekennzeichnet,**
**dass** das Probentarget (25) als Kathode verwendet wird, die durch eine vorläufige Plasmaentladung atomisiert wird, die mit Hilfe der zusätzlichen Energiequelle gezündet wird.

**20.** Verfahren nach einem der Ansprüche 1 bis19,
**dadurch gekennzeichnet,**
**dass** die Moleküle der Verunreinigungen vorher der Dissoziation in Atome in einer zusätzlichen Plasmaentladung unterzogen werden und eine Analyse der atomaren Zusammensetzung der Verunreinigungen vorgenommen wird.

**21.** Ionisationsdetektor zum Analysieren von Verunreinigungszusammensetzungen in einem Grundgas mit einer mit diesem Gasgemisch gefüllten Ionisationskammer, mit mindestens zwei Elektroden (5, 6) in der Ionisationskammer, einer Stromversorgungsquelle (13) zur Erzeugung von Teilchen definierter Energie (4) und zur Ionisierung der Verunreinigungsatome oder -moleküle und mit einer Messschaltung zur Feststellung des elektrischen Stroms als Funktion der an die beiden Elektroden (5, 6) angelegten Spannung,
**gekennzeichnet durch**

- einen derartigen Aufbau der Ionisationskammer dass bei einem gewählten Grundgasdruck der Abstand zwischen einem beliebigen Punkt in der Ionisationskammer und der nächstliegenden Kammerwand oder einer der Elektroden (5, 6) geringer als die mittlere Verlagerung eines Elektrons ist, bevor dieses einen vorgegebenen Teil seiner kinetischen Energie verliert,
- einen Äquipotentialraum in demjenigen Bereich der Ionisationskammer, in dem die Ionisierungskollisionen auftreten,
- ein zur Feststellung der Menge an Elektronen mit charakteristischen Energien ausgebildetes Messsystem, welche Elektronen während der Ionisierung der Verunreinigungen erzeugt werden.

**22.** Ionisationsdetektor nach Anspruch 21,
**dadurch gekennzeichnet,**
**dass** als Grundgas Edelgas eingesetzt ist.

**23.** Ionisationsdetektor nach Anspruch 22,
**dadurch gekennzeichnet,**
**dass** als Grundgas Helium eingesetzt ist.

**24.** Ionisationsdetektor nach einem der Ansprüche 21 bis 23,
**dadurch gekennzeichnet,**
**dass** der Druck des Grundgases von 10 bis $10^5$ Pa und mehr beträgt.

**25.** Ionisationsdetektor nach einem der Ansprüche 21 bis 24,
**dadurch gekennzeichnet,**
**dass** die angelegte Spannung zwischen den angegebenen Elektroden (5, 6) im Bereich von Null bis zur Ionisierungsschwelle des Grundgases geändert wird und dass das Messsystem derart ausgebildet ist, dass es die zweite Ableitung der Stromabhängigkeit von der Spannung zur Ermittlung der Anzahl der Elektronen mit den charakteristischen Energiewerten ermittelt.

**26.** Ionisationsdetektor nach einem der Ansprüche 21 bis 25,
**dadurch gekennzeichnet,**
**dass** Stromversorgungsquelle (13) als gepulster Generator ausgebildet ist, der ein Nachleuchtplasma in der Ionisationskammer erzeugt, dass das Messsystem derart ausgebildet ist, dass es die Messung des elektrischen Stroms mit einer Zeitverzögerung nach der Einwirkung der Generatorimpulse vornehmen kann, dass der Impulsgenerator (13) derart ausgebildet ist, dass er eine genügende Konzentration von metastabilen Atomen des Grundgases zur Messung der Elektronen mit der charakteristischen Energien erzeugen kann, wobei diese Konzentration bei der Verunreinigungsionisation durch die metastabilen Atome entsteht, dass der Impulsgenerator(13) ferner derart ausgebildet ist, dass er eine derartige Konzentration und Temperatur der geladenen Teilchen im Nachleuchtplasma bewirken kann, dass die Debye-Länge viel kleiner als die Abmessungen der Ionisationskammer zum Zeitpunkt der Strommessung ist.

**27.** Ionisationsdetektor nach Anspruch 26,
**dadurch gekennzeichnet,**
**dass** die erwähnte Energiequelle (13) die Zündung einer gepulsten Glimmentladung zwischen den genannten Elektroden (5, 6) bewirkt.

**28.** Ionisationsdetektor nach Anspruch 26,
**dadurch gekennzeichnet,**
**dass** als erwähnte Energiequelle (13) ein Impulslaser angebracht ist, der das Plasma zwischen den genannten Elektroden (5, 6) erzeugt.

**29.** Ionisationsdetektor nach einem der Ansprüche 26 bis 28,
**dadurch gekennzeichnet,**
**dass** zur Ionisierung der Atome oder Moleküle der Verunreinigungen im Nachleuchtplasma eine zusätzliche äußere Quelle (15) der Photonen mit der vorgegebenen Energie vorgesehen ist.

**30.** Ionisationsdetektor nach Anspruch 29,
**dadurch gekennzeichnet,**
**dass** die zusätzliche äußere Quelle (15) vorgesehen ist, um Photonen zu erzeugen, die in Resonanz mit den Atomen oder Molekülen des Grundgases sind.

**31.** Ionisationsdetektor nach einem der Ansprüche 21 bis 30,
**dadurch gekennzeichnet,**
**dass** die genannten Elektroden (5, 6) in flacher Form ausgebildet und parallel zueinander angeordnet sind und dass sie die Rolle der Wände der Ionisationskammer erfüllen.

**32.** Ionisationsdetektor nach einem der Ansprüche 21 bis 31,
**dadurch gekennzeichnet,**
**dass** in der Ionisationskammer N isolierte Kathoden (5) angeordnet sind, auf jeder Kathode (5) ein individueller Spannungswert bezüglich einer oder einiger gemeinsamen Anoden (6) zugeleitet ist und dass das Messsystem derart ausgebildet ist, das es den individuellen Strom zu jeder der N Kathoden (5) je nach der zugeleiteten Spannung messen kann.

**33.** Ionisationsdetektor nach einem der Ansprüche 21 bis 25,
**dadurch gekennzeichnet,**
**dass** zwischen den genannten Elektroden (5, 6) ein Leitgitter (17) angebracht ist, das elektrisch mit der Anode (6) zur Bildung eines Äquipotentialraums dazwischen verbunden ist und dass ferner eine äußere Quelle (15) von neutralen Teilchen (16) mit der vorgegebenen Energie vorgesehen ist, so dass die Atome oder Moleküle der Verunreinigungen bei der Bestrahlung des Raums zwischen dem Gitter (17) und der Anode (6) ionisiert werden.

**34.** Ionisationsdetektor nach Anspruch 33,
**dadurch gekennzeichnet,**
**dass** die genannten Elektroden (5, 6) und das Gitter (17) in flacher Form ausgebildet und parallel zueinander angeordnet sind und dass die genannten Elektroden (5, 6) die Rolle der Wände der Ionisationskammer erfüllen.

**35.** Ionisationsdetektor nach Anspruch 33 oder 34,
**dadurch gekennzeichnet,**
**dass** die äußere Quelle (16) Photonen ausstrahlt, die für die Atome oder Moleküle des Grundgases resonanzfähig sind.

**36.** Ionisationsdetektor nach einem der Ansprüche 33 bis 35,
**dadurch gekennzeichnet,**
**dass** das Messsystem derart ausgebildet ist, dass es die Steuerung des Stromes zur Kathode (5) ausführen kann und dass es bei der Überschreitung des vorgegebenen Wertes dieses Stroms im Detektor die Ausschaltung der äußeren Quelle (16), das Anlegen eines elektrischen Feldes bis zum Moment der Entfernung der geladenen Teilchen aus dem Raum zwischen den Elektroden (5, 6) und die erneute Einschaltung der äußeren Quelle (15) und die Strommessung bewirkt.

**37.** Ionisationsdetektor nach einem der Ansprüche 33 bis 36,
**dadurch gekennzeichnet,**
**dass** in der Ionisationskammer N isolierte Kathoden (5) angeordnet sind, dass jeder Kathode (5) ein individueller Spannungswert bezüglich einer oder einiger gemeinsamen Anoden (6) und jeweils einer oder einigen Gittern (17) zugeleitet wird und dass das Messsystem derart ausgebildet ist, dass es eine individuelle Strommessung an jeder der genannten N Kathoden (5) ausführen kann.

**38.** Ionisationsdetektor nach einem der Ansprüche 21 bis 37,
**dadurch gekennzeichnet,**
**dass** eine zusätzliche Energiequelle vorgesehen ist, die ein Probentargetmaterial (25) als Verunreinigung im Grundgas atomisiert, und dass die mit dem Grundgas gemischte Verunreinigung der Ionisationskammer zur Analyse der Zusammensetzung zugeführt wird.

**39.** Ionisationsdetektor nach Anspruch 38,
**dadurch gekennzeichnet,**
**dass** das genannte Probentargetarget (25) als Kathode zur Atomisierung durch eine vorhergehende Plasmaglimmentladung vorgesehen ist, die mit Hilfe der zusätzlichen Energiequelle gezündet wird.

**40.** Ionisationsdetektor nach einem der Ansprüche 21 bis 39,
**dadurch gekennzeichnet,**
**dass** eine zusätzliche Plasmaentladungsquelle dazu verwendet wird, eine vorhergehende Dissoziation der Probenmoleküle in Atome zur Analyse Elementarzusammenstellung der Probe in der Ionisationskammer vorzunehmen.

**41.** Ionisationsdetektor nach einem der Ansprüche 33 bis 37,
**dadurch gekennzeichnet,**
**dass** die Strahlungsquelle mit Argon gefüllt ist und ein zylindrisches Fenster, das für diese Strahlung durchlässig ist, zwei Elektroden (5, 6) an den Stirnseiten des Fensters und ein Versorgungssystem für die Zündung der Gasglimmentladung aufweist, dass die genannte Anode (6), die genannte Kathode (5) und das genannte Gitter (17) für das Detektieren der Fotoelektronen die Form von flachen, zueinander parallelen Ringen aufweisen, die koaxial und außerhalb vom zylindrischen Fenster der Strahlungsquelle angebracht sind, wobei die Strahlung nur im Raum zwischen der Anode (6) und dem Gitter (17) durchgeht.

**Claims**

**1.** A method for the analysis of impurities in a main gas comprising:

an ionization of impurity atoms and molecules in their collisions with particles (4) of definite energy in an ionization chamber;

measurement of an electric current between, at least, two electrodes (5,6) which are positioned in said chamber, as a function of the voltage applied between said two electrodes (5,6);

selection of a main gas pressure and of said ionization chamber geometry in such that a distance between any point in said chamber and the nearest chamber wall or one of said electrodes (5,6) is less than a mean displacement of an electrons before they lose a given portion of its kinetic energy;

providing equipotential space at the region of said ionization chamber, where said ionizing collisions occur;

determination of amount of electrons with characteristic energies, which are generated in the ionization of said atoms or molecules, from electric current dependence on the voltage applied between said electrodes (5,6); and identification of said impurities in said main gas from parameters of said electrons.

2.  The method according to claim 1, wherein said main gas is a noble gas.

3.  The method according to claim 2, wherein said main gas is helium.

4.  The method according to claims 1-3, wherein said main gas pressure may vary from 10 to $10^5$ Pa.

5.  The method according to claims 1-4, wherein a voltage applied between two said electrodes (5,6) is varied from 0 to the ionization threshold of said main gas, and the amount of said electrons with the characteristic energies is determined from the second derivative of the electric current dependence on the voltage applied.

6.  The method according to claims 1-5, wherein said equipotential space is created in said ionization chamber region by using a pulsed power source to produce an afterglow plasma in the ionization chamber; said impurity atoms or molecules are ionized in collisions with metastable atoms or molecules (4) of said main gas, generated under the effect of said pulsed power source; said current is measured with a time delay following the power source effect; and the concentration and temperature of the charged particles in the afterglow plasma at the moment of measurement are provided so that the Debye length is much less than the dimensions of said ionization chamber.

7.  The method according to claim 6, wherein a pulsed glow discharge is ignited between said electrodes (5,6) using pulsed power source (13).

8.  The method according to claim 6, wherein pulsed laser radiation (15) as a said pulsed power source is used to create plasma in the gap between said electrodes (5,6).

9.  The method according to claims 6-8, wherein said impurity atoms or molecules are ionized when said afterglow plasma is irradiated by photons of a definite energy from an external source (15).

10. The method according to claim 9, wherein said impurity atoms or molecules are ionized by irradiation by photons resonant to the atoms or molecules of said main gas.

11. The method according to claims 1-10, wherein said electrodes (5,6) have a planar shape and are parallel each other.

12. The method according to claims 1-11, wherein said ionization chamber is used with N insulated cathodes (5) positioned inside; an individual voltage with respect to one or several anodes (6) is applied to each cathode (5); the current across each of the N cathodes (5) is measured; the amount of electrons with the characteristic energy values, which are generated in the ionization of the impurity atoms or molecules, is found from combined data on the currents measured.

13. The method according to claims 1-5, wherein a conducting grid (17) is placed between said electrodes (5,6), which is electrically connected to an anode (6) to create an equipotential space between them; the impurity atoms or molecules are ionized by irradiating the space between said grid (17) and said anode (6) by neutral particles (16) of definite energy from an external source (15).

14. The method according to claim 13, wherein said electrodes (5,6) and said grid (17) have planar shapes and are arranged in parallel, on the same time, said electrodes (5,6) are used as the walls of said ionization chamber.

15. The method according to claims 13 or 14, wherein the impurity atoms or molecules are ionized by photons resonant to the atoms of said main gas.

16. The method according to claims 13-15, wherein an electric charge passed across a cathode (5) is controlled; when said charge exceeds the prescribed value, said external source (15) is turned off and an electric field is applied until charged particles are removed from said inter-electrode (5,6) gap; then said external source (15) is turned on and the current is measured again.

17. The method according to claims 13-16, wherein N insulated cathodes (5) are positioned in said ionization chamber; an individual voltage relative to corresponding grids (17) and one or several anodes (6) is applied to each cathode (5); the individual current across each of the N cathodes (5) is measured; combined measured current values are used to find the amount of electrons with the characteristic energies, produced in the ionization of said impurity atoms or molecules.

18. The method according to claims 1-17, further comprising a process wherein the impurities to be analyzed are provided by a target sample (25) material atomization using with an additional power source; the impurities formed are mixed with said main gas and are delivered into said ionization chamber.

19. The method according to claim 18, wherein said target sample (25) is used as a cathode atomized by a preliminary plasma discharge ignited by said additional power source.

20. The method according to claims 1-19, wherein the impurity molecules are pre-dissociated into atoms in an additional plasma discharge and the atomic composition of said impurities is analyzed.

21. An ionization detector for the analysis of the impurities composition in a main gas, comprising:

an ionization chamber filled with said main gas and impurities mixture and, at least, two electrodes (5,6) installed inside of said chamber;
a power source generating the particles (4) of definite energy used for ionization of the impurity atoms or molecules;
a measuring circuit to detect electric current as a function of the voltage applied between said electrodes (5,6); said main gas pressure and the ionization chamber geometry being chosen in such that a distance from any point inside of said ionization chamber to nearest chamber wall or one of said electrodes (5,6) is less than a mean displacement of electrons before they lose the definite portion of their kinetic energy;
an equipotential space is provided at the region of said ionization chamber where said impurities ionization occurs;
a measuring circuit able to determine the amount of electrons with characteristic energies arising during the ionization of said impurities.

22. The ionization detector according to claim 21, wherein a noble gas is used as said main gas.

23. The ionization detector according to claim 22, wherein helium is used as said main gas.

24. The ionization detector according to claims 21-23, wherein said main gas pressure varies from 10 to $10^5$ Pa and more.

25. The ionization detector according to claims 21-24, wherein the voltage applied between two said electrodes (5,6) is varied in the range from 0 to the ionization threshold of said main gas, and said measuring circuit is designed to find second derivative of the current dependence on the voltage applied to determine the amount of electrons with the characteristic energy values.

26. The ionization detector according to claims 21-25, wherein said power source is a pulsed generator for creation of an afterglow plasma in said ionization chamber; the measuring circuit is designed to register the electric current with a time delay after the plasma generator pulse; said generator is capable of producing sufficient concentration of metastable atoms of the main gas to register the electrons with the characteristic energies, formed in the impurities ionization by said metastable atoms, said pulsed generator is also capable to produce such concentration and temperature of charged particles in the afterglow plasma that the Debye length is much less than the dimensions of the ionization chamber at the moment of the current measurement.

27. The ionization detector according to claim 26, wherein a power source (13) ignites a pulsed glow discharge between two said electrodes (5,6).

28. The ionization detector according to claim 26, wherein said power source is a pulsed laser (15) creating plasma between two said electrodes (5,6).

29. The ionization detector according to claims 26-28, wherein an additional external source (15) of photons of definite energy is installed to ionize the impurity atoms or molecules in the afterglow plasma.

30. The ionization detector according to claim 29, wherein said additional external source (15) generates photons resonant to the atoms or molecules of said main gas.

31. The ionization detector according to claims 21-30, wherein said electrodes (5,6) are of plane-parallel shape and play a role of said ionization chamber.

32. The ionization detector according to claims 21-31, wherein said ionization chamber comprises N insulated cathodes (5); an individual voltage is applied to each of said cathodes (5) relative to one or several connected anodes (6); said measuring circuit is capable of measuring the individual electric current across each of N said cathodes (5) as a function of the applied voltage.

33. The ionization detector according to claims 21-25, wherein a conducting grid (17) is positioned between two said electrodes (5,6) and is electrically connected with said anode (6) to create an equipotential space between them; an external source (15) of neutral particles (16) of a definite energy is installed in such a way that the impurity atoms or molecules are ionized due to the irradiation of the space between said grid (17) and said anode (6).

34. The ionization detector according to claim 33, wherein said electrodes (5,6) and said grid (17) are of plane form and installed parallel to each other, thus the electrodes (5,6) play a role of said ionization chamber's walls.

35. The ionization detector according to claims 33 or 34, wherein said external source (15) generates photons (16) resonant to the atoms or molecules of said main gas.

36. The ionization detector according to claims 33-35, wherein said measuring circuit is designed capable to control the current across said cathode (5); when this current exceeds a prescribed value, said measuring circuit turns off said external source (15), applies an electric field until the charged particles are removed from said inter-electrode (5,6) gap, then turns on said external source (15) again and continues to measure the current.

37. The ionization detector according to claims 33-36, wherein said ionization chamber contains N insulated cathodes (5); individual voltage is applied to each of said cathode (5) relative to corresponding grid (17) and one or several anodes (6); said measuring circuit is capable to measure the current across each of said N cathodes (5) individually.

38. The ionization detector according to claims 21-37, wherein an additional power source is used to atomize a sample target (25) material as an impurity into said main gas and there are means for supplying said mixture to said ionization chamber for the composition analysis.

39. The ionization detector according to claim 38, wherein said sample target (25) is installed as a cathode for a sputtering by a preliminary plasma glow discharge ignited by said additional power source.

40. The ionization detector according to claims 21-39, wherein an additional plasma discharge source is used to produce pre-dissociation of impurities molecules into atoms for the analysis of the impurities elemental composition in said ionization chamber.

41. The ionization detector according to claims 33-37, wherein external radiation source is filled with argon and comprises a cylindrical window (41) transparent to this radiation, two electrodes (42,43) covering the butt sides of said window, a power source to ignite a glow discharge (44) inside of said cylindrical window between said two electrodes, said anode (45), cathode (49) and grid (46) for photoelectrons detection are formed as plane-parallel rings external to said cylindrical window and arranged coaxially with said cylindrical window (41) in such a way that the radiation penetrates only the space between said anode (45) and said grid (46).

**Revendications**

1. Procédé d'analyse des additifs dans le gaz essentiel comprenant l'ionisation des atomes et des molécules de l'addition durant la collision dans une chambre d'ionisation avec des particules de certaine énergie (4), pourtant l'intensité du courant électrique au minimum entre deux électrodes (5,6) installés dans la chambre d'ionisation est mesurée dépendamment de la tension appliquée à ces deux électrodes (5,6), **caractérisé en ce que**:

   - la pression du gaz essentiel et la configuration de la chambre d'ionisation sont choisies d'une telle manière que la distance entre n'importe quel point de la chambre d'ionisation et le mur le plus proche de la chambre ou du n'importe quel électrode (5, 6) soit inférieure à une valeur moyenne de déplacement d'électron jusqu'au moment de la perte d'une partie déterminée de l'énergie cinétique,
   - l'espace équipotentiel est créé dans le domaine de la chambre d'ionisation dans lequel la collision ionisante a lieu,
   - dépendamment de l'intensité du courant et de la tension électrique appliquée à l'espace entre les électrodes (5, 6) on détermine la quantité des électrons avec l'énergie caractéristique qui apparaissent durant l'ionisation des atomes mentionnés ou des molécules et c'est à la base des paramètres de ces électrons qu'on effectue l'analyse des additions dans le gaz essentiel.

2. Procédé selon la revendication 1, **caractérisé en ce qu'**en qualité du gaz essentiel on utilise un gaz inerte.

3. Procédé selon la revendication 2, **caractérisé en ce qu'**en qualité du gaz essentiel on utilise l'hélium.

4. Procédé selon les revendications 1 - 3, **caractérisé en ce que** la pression du gaz essentiel compose $10\text{-}10^5$ Pa est même plus.

5. Procédé selon les revendications 1 - 4, **caractérisé en ce que** la tension appliquée à deux électrodes (5,6) change dans le diapason entre le 0 et jusqu'au seuil d'ionisation du gaz essentiel et la quantité des électrons avec l'énergie caractéristique est déterminée à l'aide du deuxième dérivé de la fonction du courant électrique de la tension appliquée.

6. Procédé selon les revendications 1 - 5, **caractérisé en ce que** dans la chambre d'ionisation à l'aide d'une source d'énergie intermittente on crée un post-décharge de plasma pour la formation un espace équipotentiel; et les atomes ou les molécules de l'addition sont ionisées durant la collision avec les atomes ou les molécules métastables (4) du gaz essentiel qui se forment à cause de l'influence de la source d'énergie intermittente; pourtant on mesure le courant avec un retard après l'influence des impulsions de la source d'énergie; on assure dans le moment de mesurage dans post-décharge de plasma une telle concentration et une telle température des particules chargées que le rayon de Debye devienne beaucoup plus inférieur que les dimensions de la chambre d'ionisation.

7. Procédé selon la revendication 6, **caractérisé en ce qu'**en qualité d'une source d'alimentation intermittente (13) on utilise une décharge gazeuse qui se forme entre deux électrodes (5,6).

8. Procédé selon la revendication 6, **caractérisé en ce que** pour la formation du plasma en espace interélectrode (5,6) en qualité d'une source d'énergie intermittente (15) on utilise une émission pulsée laser.

9. Procédé selon les revendications 6 - 8, **caractérisé en ce que** l'ionisation des atomes ou des molécules des additions se passe à cause de l'influence du rayonnement photonique avec une énergie requise des photons sur le post-décharge de plasma; pourtant le rayonnement est envoyé à partir de la source externe (15).

10. Procédé selon la revendication 9, **caractérisé en ce que** l'ionisation des atomes ou des molécules des additions se passe à cause de l'influence du rayonnement photonique qui résonne avec des atomes ou des molécules du gaz essentiel.

11. Procédé selon les revendications 1 - 10, **caractérisé en ce qu'**en processus on utilise des électrodes parallèles plats (5,6) qui effectuent simultanément la fonction des murs de la chambre d'ionisation.

12. Procédé selon les revendications 1 - 11, **caractérisé en ce qu'**on installe N des cathodes isolés (5) dans la chambre d'ionisation; on envoie à chaque cathode (5) une certaine tension requise dépendamment d'un ou de plusieurs anodes (6), pourtant on mesure l'intensité du courant sur chaque électrode ledit (5) et on détermine la quantité des électrons avec des valeurs caractéristiques de l'énergie qui apparaisse durant l'ionisation des atomes et des molécules mentionnés des additions et cette détermination est effectuée à l'aide des paramètres mesurés.

**13.** Procédé selon les revendications 1 - 5, **caractérisé en ce qu'**entre les électrodes mentionnés (5,6) on installe un filet conducteur (17) lié de manière électrique à une anode (6) pour la création de l'espace équipotentiel entre eux; le rayonnement ionisant envoyé à partir de la source externe (15) vers l'espace entre le filet (17) et l'anode (6), pourtant des photons de l'énergie requise (16) provoquent l'ionisation des atomes et des molécules des additions.

**14.** Procédé selon la revendication 13, **caractérisé en ce qu'**en processus on utilise des électrodes plats (5, 6) et le filet (17) situés parallèlement par rapport l'un à l'autre pourtant les électrodes (5,6) sont utilisés simultanément en qualité des murs de la chambre d'ionisation.

**15.** Procédé selon les revendications 13 ou 14, **caractérisé en ce que** l'ionisation des atomes ou des molécules des additions se passe à cause de l'influence du rayonnement photonique qui résonne avec des atomes ou des molécules du gaz essentiel.

**16.** Procédé selon les revendications 13 - 15, **caractérisé en ce que** la charge de la cathode (5) est réglée et si la valeur de la charge surpasse la valeur requise on débranche la source externe (15) et le champ électrique continue à influer jusqu'à ce que les particules chargées soient éliminées de l'espace entre les électrodes (5,6) et ensuite on branche la source externe (15) et on mesure l'intensité du courant.

**17.** Procédé selon les revendications 13 - 16, **caractérisé en ce que** dans la chambre d'ionisation on installe N des cathodes isolés; à chaque cathode (5) on envoie une certaine tension requise par rapport à un ou à plusieurs anodes (6) ou par rapport à un ou plusieurs filets (17); pourtant on mesure l'intensité du courant sur chaque cathode (5) mentionné et à l'aide de l'ensemble des paramètres mesurés on détermine la quantité des électrons avec des valeurs caractéristiques de l'énergie qui apparaissent durant l'ionisation des atomes et des molécules des additions mentionnés.

**18.** Procédé selon les revendications 1 - 17, **caractérisé en ce qu'**en qualité des additions on utilise la composition du matériel de l'échantillon spécial (25) qui se désagrège aux atomes à cause de l'influence de l'énergie à partie de la source supplémentaire pourtant les additions formées se mélangent avec le gaz essentiel et se dirigent vers la chambre d'ionisation.

**19.** Procédé selon la revendication 18, **caractérisé en ce que** l'échantillon spécial (25) est utilisé en qualité d'une cathode qui se désagrège en atomes à cause de l'influence d'une décharge de plasma allumée sous l'influence de la source d'alimentation supplémentaire.

**20.** Procédé selon les revendications 1 - 19, **caractérisé en ce que** les molécules des additions avant la décomposition sont soumises à l'influence d'une décharge supplémentaire de plasma et qu'on effectue l'analyse de la composition atomique des additions.

**21.** Le détecteur d'ionisation pour l'analyse de la composition des additions dans le gaz essentiel comprenant une chambre d'ionisation remplie d'un gaz requis, des électrodes (5, 6) (deux électrodes au minimum) installés dans la chambre d'ionisation, la source d'énergie pour la création des particules (4) de l'énergie requise utilisées pour l'ionisation des atomes ou des molécules de l'addition; le schéma de mesurage pour la détermination de l'intensité du courant électrique en fonction de la tension électrique appliquée à deux électrodes (5, 6), **caractérisé en ce que**:

- la configuration de la chambre d'ionisation est choisie d'une telle manière que sous l'influence d'une certaine pression du gaz essentiel la distance entre n'importe quel point de la chambre d'ionisation et le mur le plus proche de la chambre ou du n'importe quel électrode (5, 6) soit inférieure à une valeur moyenne de déplacement des électrons jusqu'au moment de la perte d'une partie déterminée de l'énergie cinétique,
- l'espace équipotentiel est créé dans le domaine de la chambre d'ionisation dans lequel la collision ionisante a lieu,
- le système de mesurage doit assurer la possibilité de détermination de la quantité des électrons avec de l'énergie requise qui apparaissent durant l'ionisation des additions.

**22.** Le détecteur d'ionisation selon la revendication 21, **caractérisé en ce qu'**en qualité du gaz essentiel on utilise un gaz inerte.

**23.** Le détecteur d'ionisation selon la revendication 22, **caractérisé en ce qu'**en qualité du gaz essentiel on utilise l'hélium.

**24.** Le détecteur d'ionisation selon les revendications 21 - 23, **caractérisé en ce que** la pression du gaz essentiel compose 10-10$^5$ Pa est même plus.

**25.** Le détecteur d'ionisation selon les revendications 21 - 24, **caractérisé en ce que** la tension appliquée à deux électrodes (5,6) change dans le diapason entre le 0 et jusqu'au seuil d'ionisation du gaz essentiel et la quantité des électrons avec l'énergie caractéristique est déterminée à l'aide du deuxième dérivé de la fonction du courant de la tension appliquée.

**26.** Le détecteur d'ionisation selon les revendications 21 - 25, **caractérisé en ce que** la source d'énergie fonctionne selon le principe de générateur impulsionnel; en forment le post-décharge de plasma dans la chambre d'ionisation; l'intensité du courant est mesurée avec un retard après l'influence des impulsions du générateur et le générateur impulsionnel doit assurer la possibilité de la formation d'une concentration nécessaire des atomes métastables du gaz essentiel pour le mesurage des électrons avec de l'énergie caractéristique, pourtant le générateur impulsionnel doit assurer régler telle concentration et la température des particules chargées dans le post-décharge de plasma pour que le rayon de Debye devienne beaucoup plus inférieur que les dimensions de la chambre d'ionisation dans le moment de mesurage de l'intensité du courant.

**27.** Le détecteur d'ionisation selon la revendication 22, **caractérisé en ce qu'**entre les électrodes requis (5, 6) on allume une décharge gazeuse impulsionnelle à l'aide de l'influence de la source d'alimentation (13).

**28.** Le détecteur d'ionisation selon la revendication 26, **caractérisé en ce qu'**en qualité d'une source d'énergie on utilise un laser (15) pulsé qui crée le plasma dans l'espace entre les électrodes requis (5, 6).

**29.** Le détecteur d'ionisation selon les revendications 21 - 25, **caractérisé en ce que** pour l'ionisation des atomes ou des molécules des additions on a prévu dans le post-décharge de plasma une source supplémentaire externe (15) du rayonnement photonique avec une énergie requise.

**30.** Le détecteur d'ionisation selon la revendication 29, **caractérisé en ce que** dans ledit détecteur on a prévu une source externe supplémentaire (15) pour la formation des photons qui résonnent avec des atomes ou des molécules du gaz essentiel.

**31.** Le détecteur d'ionisation selon les revendications 21 - 25, **caractérisé en ce que** dans ledit détecteur on utilise des électrodes parallèles plats (5, 6) qui représentent la fonction des murs de la chambre d'ionisation.

**32.** Le détecteur d'ionisation selon les revendications 21 - 31, **caractérisé en ce que** dans on installe des N cathodes isolés (5) dans la chambre d'ionisation et on envoie à chaque cathode (5) une certaine tension requise dépendamment d'un ou de plusieurs anodes (6) communs et on assure le mesurage de l'intensité du courant sur chaque de N cathode (5) dépendamment de la tension appliquée.

**33.** Le détecteur d'ionisation selon les revendications 21 - 25, **caractérisé en ce qu'**entre les électrodes indiqués (5, 6) on installe un filet conducteur (17) lié de manière électrique à une anode (6) pour la création de l'espace équipotentiel entre eux, pourtant on a prévue une source externe (15) des particules neutres (16) avec de l'énergie requise qui provoque l'ionisation des atomes et des molécules des additions dans l'espace entre le filet (17) et l'anode (6) sous l'influence du rayonnement.

**34.** Le détecteur d'ionisation selon la revendication 33, **caractérisé en ce qu'**on utilise des électrodes plats (5, 6) et le filet (17) situés parallèlement par rapport l'un à l'autre pourtant les électrodes (5,6) sont utilisés simultanément en qualité des murs de la chambre d'ionisation.

**35.** Le détecteur d'ionisation selon les revendications 33 ou 34, **caractérisé en ce que** la source externe (15) rayonne des photons (16) qui résonnent avec des atomes ou des molécules du gaz essentiel.

**36.** Le détecteur d'ionisation selon les revendications 33 - 35, **caractérisé en ce qu'**on règle l'intensité du courant envoyé à la cathode (5); si la valeur de la charge surpasse la valeur requise dans le détecteur on débranche la source externe (15); le champ électrique apparaît qui continue à influer jusqu'à ce que les particules chargées soient éliminées de l'espace entre les électrodes (5,6), ensuite on branche la source externe (15) et on mesure l'intensité du courant.

**37.** Le détecteur d'ionisation selon les revendications 33 - 36, **caractérisé en ce que** dans la chambre d'ionisation on installe N des cathodes isolés (5); à chaque cathode (5) on envoie une certaine tension requise par rapport à un ou à plusieurs anodes communes (6) ou par rapport à un ou plusieurs filets (17); pourtant on assure le mesurage de l'intensité du courant sur chaque cathode mentionné (5).

**38.** Le détecteur d'ionisation selon les revendications 21 - 37, **caractérisé en ce que** dans ledit détecteur on a prévu une source d'alimentation supplémentaire sous l'influence duquel le matériel de l'échantillon spécial (25) se décompose en atomes en qualité d'une additions dans le gaz essentiel et les additions mélangées avec le gaz essentiel passent dans la chambre d'ionisation pour l'analyse de la composition.

**39.** Le détecteur d'ionisation selon le revendication 38, **caractérisé en ce que** le matériel requis de l'échantillon spécial (25) est utilisé en qualité d'une cathode pour l'atomisation à l'aide d'une décharge de plasma sous l'influence de la source d'alimentation externe.

**40.** Le détecteur d'ionisation selon les revendications 21 - 39, **caractérisé en ce que** la source supplémentaire de la décharge de plasma est utilisée pour la décomposition préliminaire des molécules de l'échantillon en atomes pour l'analyse de la composition élémentaire de l'échantillon dans la chambre d'ionisation.

**41.** Le détecteur d'ionisation selon les revendications 33 - 37, **caractérisé en ce que** la source de rayonnement est rempli d'argon et se compose d'une fenêtre cylindrique (41) qui laisse passer ce rayonnement; de deux électrodes (42, 43) situés aux côtés de la fenêtre et d'un système d'alimentation pour l'allumage de la décharge gazeuse (44), pourtant l'anode mentionnée (45), la cathode mentionnée (49) et le filet mentionné (46) pour la détermination des photoélectrons ont des formes des anneaux plates parallèles l'un à l'autre et situés de manière coaxiale dehors de la fenêtre cylindrique (41) de la source de rayonnement, pourtant le rayonnement ne passe que dans l'espace entre l'anode (45) et le filet (46).

**Fig.1**

**Fig.2**

**Fig.3**

**Fig.4**

**22**

**21** **21** **21** **21**

DAC
12

**23** **23** **23** **23** **23**

zum ADC    ADC    ADC    ADC    ADC
zum    zum    zum    zum

19    19    19    19    19    17

6

**Fig.5**

**Fig.6**

**Fig.7**

**Fig.8**

**Fig.9**

**EP 1 557 667 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5317271 A, von Wentworth
- US 5192865 A, von Zhueta
- US 5153519 A, von Wentworth
- US 5578271 A, von Simon
- US 5532599 A, von Steam
- DE 19627620

**In der Beschreibung aufgeführte Nicht-Patentliteratur**

- Die hocheffektive Gas-Chromatographie. **K. Hayver.** MIR. Moskau, 1993, 289 S
- **T. Karlson.** Fotoelektronische und Auger-Spektroskopie. *Maschinistroyenie,* 1981, 431 S
- **von V.L. Granovsky.** Elektrischer Strom im Gas. Staatlicher Verlag, 1952, vol. 1, 432